# EUROPÄISCHE PATENTSCHRIFT

(11) **EP 3 704 529 B1**
(45) Veröffentlichungstag und Bekanntmachung des Hinweises auf die Patenterteilung: **01.01.2025**
(21) Anmeldenummer: 18808229.1
(22) Anmeldetag: 05.11.2018
(51) Int. Cl.: G02B 21/00, G02B 21/36

(54) **VERFAHREN UND VORRICHTUNG ZUM ABRASTERN EINER PROBE**
METHOD AND DEVICE FOR SCANNING A SAMPLE
PROCÉDÉ ET DISPOSITIF DE BALAYAGE D'UN ÉCHANTILLON

(30) Priorität: 03.11.2017 DE 102017125688
(43) Veröffentlichungstag der Anmeldung: 09.09.2020
(73) Patentinhaber: Leica Microsystems CMS GmbH, 35578 Wetzlar (DE)
(72) Erfinder: FRIEDRICH, Lars, 69469 Weinheim (DE); BIRK, Holger, 74909 Meckesheim (DE)
(74) Vertreter: Schaumburg und Partner Patentanwälte mbB
(86) Internationale Anmeldenummer: PCT/EP2018/080208
(87) Internationale Veröffentlichungsnummer: WO 2019/086680

(56) Entgegenhaltungen:
- EP-A1- 1 431 795
- WO-A1-2005/033767
- US-A1- 2007 127 003
- US-A1- 2015 226 677

## Beschreibung

Die Erfindung betrifft ein Verfahren zum Abrastern einer Probe, bei dem mindestens zwei Beleuchtungspunkte zur Bildung eines Punktmusters erzeugt werden. Das Punktmuster hat eine einstellbare Anzahl von Beleuchtungspunkten. Die Erfindung betrifft ferner eine Vorrichtung zum Abrastern einer Probe.

Bei rasternden Mikroskopen ist ein bekanntes Problem, dass die Rastergeschwindigkeit nicht beliebig gesteigert werden kann. Gründe hierfür sind zum einen die begrenzte Geschwindigkeit der Vorrichtungen, die eine Rasterbewegung bewirken, wie beispielsweise Galvanometer-Spiegel, akustooptische Deflektoren (AOD) oder elektrooptische Deflektoren. Zum anderen nimmt das Signal-zu-Rausch-Verhältnis bei höheren Rastergeschwindigkeiten immer mehr ab, da die Verweildauer des Beleuchtungspunktes auf dem jeweiligen Punkt auf der Probe immer kürzer wird.

Aus der US 6,677,596 B2 und aus Bewersdorf, J.; Pick, R. & Hell, S. W. Multifocol multiphoton microscopy Opt Lett, 1998, 23, 655-657 sind Verfahren zum Abrastern einer Probe bekannt, bei denen das zum Abrastern benutzte Beleuchtungslichtbündel in mehrere Beleuchtungslichtpunkte aufgespalten wird, um den Rastervorgang zu parallelisieren. Aus der US 7,724,426 B2 ist ein Verfahren zum Abrastern einer Probe bekannt, bei dem das zum Abrastern benutzte Beleuchtungslichtbündel zur Parallelisierung des Rastervorgangs durch einen AOD in mehrere Beleuchtungspunkte aufgespalten wird.

Aus Bergermann, F.; Alber, L.; Sahl, S. J.; Engelhardt, J. & Hell, S. W. 2000-fold parallelized dual-color STED fluorescence nanoscopy Opt Express, 2014, 23, 211-223*,* aus der US 8,054,542 B2, aus Fittinghoff, D. N.; Wiseman, P. W. & a. Squier, J. Widefield multiphoton and temporally decorrelated multifocol multiphoton microscopy Opt Express, 2000 und Sacconi, L.; Froner, E.; Antolini, R.; Taghizadeh, M. R.; Choudhury, A. & Pavone, F. S. Multiphoton multifocol microscopy exploiting a diffractive optical element Opt Lett, 2003 sind Verfahren zum Abrastern eines vorgegebenen Bereichs einer Probe bekannt, bei denen mithilfe eines in mehrere Beleuchtungspunkte aufgespaltenen Beleuchtungslichtbündels ein Punktmuster erzeugt wird. Das Punktmuster erstreckt sich entlang einer Richtung über einen Großteil des vorgegebenen Bereichs der Probe. Die Beleuchtungspunkte sind äquidistant entlang dieser Richtung angeordnet. In mehreren Rasterschritten werden in Richtung der vorgenannten Richtung aufeinanderfolgende Rasterzeilen abgerastert, bis der vorgegebene Bereich vollständig abgerastert ist. Ein Nachteil dieser Verfahren liegt darin, dass die Größe des Punkmusters direkt an die Größe des vorgegebenen Bereichs gekoppelt ist. Ein anderer Nachteil dieser Verfahren ist, dass es technische Grenzen für die Größe des Punktmusters bzw. des vorgegebenen Bereichs gibt, weil die optischen Bauteile zur Erzeugung des Punktmusters unvorteilhaft groß ausgeführt sein müssen. Ferner führen bei einer Aufspaltung des Beleuchtungslichtbündels mit einem AOD große Abstände zwischen den Beleuchtungspunkten zu einer besonders starken räumlichen Dispersion, die sich nachteilhaft auswirken kann, insbesondere bei der Verwendung von breitbandigen Beleuchtungslichtquellen, beispielsweise Kurzpulslasern.

Aus Hecht, D. L. Beiser, L. (Ed.) Multibeam Acoustooptic and Electrooptic Modulators Proc. SPIE 0396, Advances in Laser Scanning and Recording, 2, 1983 und aus Powell, K.; Urey, H. & Bayer, M. Lewandowski, R. J.; Haworth, L. A.; Girolomo, H. J. & Rash, C. E. (Eds.) Multi-beam Bidirectional Raster Scanning in Retinal Scanning Displays Helmetand Head-Mounted Displays VI, 2001, 4361 sind Verfahren zum Abrastern eines vorgegebenen Bereichs einer Probe bekannt, bei denen mithilfe eines in mehrere Beleuchtungspunkte aufgespaltenen Beleuchtungslichtbündels ein Punktmuster erzeugt wird. Das Punktmuster besteht aus mehreren Beleuchtungspunkten, die in einem Abstand von einer Rasterzeile aufeinanderfolgend angeordnet sind. Mithilfe des Punktmusters wird der vorgegebene Bereich in mehreren Rasterschritten vollständig abgerastert. Ein Nachteil dieser Verfahren liegt darin, dass bei bestimmten Mikroskopieverfahren, insbesondere bei der Multiphotonen-Mikroskopie, ein geringer Abstand zwischen den Beleuchtungspunkten zu einer geringen axialen Auflösung führt, da sich die Beleuchtungspunkte außerhalb der Fokalebene verbreitern und dort überlappen können. Mit anderen Worten, die geringe axiale Auflösung ergibt sich daraus, dass sich die in drei Dimensionen lokalisierten Beleuchtungspunkte außerhalb der Fokalebene verbreitern und dort überlappen können, so dass die Lokalisierung entlang der Ausbreitungsrichtung (axiale Richtung) vermindert wird.

Aus Bingen, P.; Reuss, M.; Engelhardt, J. & Hell, S. W. Parallelized STED fluorescence nanoscopy Opt Express, 2011, 19, 23716-23726 ist ein Verfahren zum Abrastern eines vorgegebenen Bereichs einer Probe bekannt, bei dem mithilfe eines in mehrere Beleuchtungspunkte aufgespaltenen Beleuchtungslichtbündels ein Punktmuster erzeugt wird. Die Beleuchtungspunkte des Punktmusters sind äquidistant entlang einer Richtung angeordnet. In mehreren Rasterschritten werden entlang dieser Richtung aufeinanderfolgende Rasterzeilen eines Abschnitts des vorgegebenen Bereichs abgerastert. Dies wird für weitere, entlang der vorgenannten Richtung angeordnete Abschnitte des vorgegebenen Bereichs wiederholt, so dass sich aus den jeweils abgerasterten Abschnitten der vorgegebene Bereich ergibt. Ein Nachteil dieses Verfahrens liegt darin, dass beim Abrastern unterschiedlich große Schrittweiten realisiert werden müssen, was insbesondere bei der Verwendung mechanischer Abrastervorrichtungen, die nur eine begrenzte Präzision besitzen, zu unerwünschten Bildartefakten führen kann.

Aus DE 10 2012 019 121 A1 ist ein weiteres Verfahren zum Abrastern eines vorgegebenen Bereichs einer Probe bekannt bei dem mithilfe mehrerer Beleuchtungspunkte ein Punktmuster erzeugt wird. Mittels der Beleuchtungspunkte des Punktmusters werden in mehreren Rasterschritten entlang einer Richtung aufeinanderfolgende Rasterzeilen eines Abschnitts des vorgegebenen Bereichs abgerastert. Nach erfolgtem Abrastern des Abschnitts wird das Punktmuster um mehrere Rasterzeilen entlang der vorgenannten Richtung bewegt, um einen weiteren Abschnitt des vorgegebenen Bereichs abzurastern. Aus den jeweils abgerasterten Abschnitten ergibt sich der vorgegebene Bereich. Auch bei diesem Verfahren müssen beim Abrastern unterschiedlich große Schrittweiten realisiert werden, was zu unerwünschten Bildartefakten führen kann.

Aus Martini, J. Multifocal Multiphoton Microscopy: New Detection Methods and Biological Applications Bielefeld University, 2006, Dissertation*,* ist ein weiteres Verfahren zum Abrastern eines vorgegebenen Bereichs einer Probe bekannt, bei dem mithilfe eines in mehrere Beleuchtungspunkte aufgespaltenen Beleuchtungslichtbündels ein Punktmuster erzeugt wird.

US 2015/0226677 A zeigt ein Verfahren zum Abrastern eines Wafers mittels dreier Lichtpunkte, die entlang einer AOD-Abrasterrichtung angeordnet sind. Der Wafer wird in eine zu der AOD-Abrasterrichtung senkrechten Tisch-Abtastrichtung bewegt. Durch die Bewegung der Lichtpunkte entlang der Tisch-Abtastrichtung wird jeweils ein Band abgerastert. Dabei werden die Lichtpunkte zugleich innerhalb der Bänder in die AOD-Abrasterrichtung bewegt.

US 2007/127003 A1 offenbart ein Verfahren zum Abrastern einer Probe, bei dem ein Punktmuster bestehend aus drei Lichtpunkten zum Erzeugen von Rasterzeilen entlang einer ersten Richtung bewegt wird. Erreichen die Lichtpunkte bei ihrer Bewegung längs der ersten Richtung das Ende der Rasterzeile, so wird die Bewegung in die erste Richtung zurückgesetzt und das ganze Punktmuster um eine Rasterzeile in eine zweite zur ersten Richtung senkrechten Richtung bewegt. Die Lichtpunkte sind innerhalb des Punktmusters entlang der zweiten Richtung mit einem Abstand von jeweils drei Rasterzeilen angeordnet.

Es ist Aufgabe der Erfindung, ein Verfahren zum Abrastern einer Probe anzugeben, das eine flexible Erzeugung eines optimalen Punktmusters für das Abrastern der Probe ermöglicht.

Diese Aufgabe wird durch ein Verfahren mit den Merkmalen des Anspruchs 1 und eine Vorrichtung mit den Merkmalen des Anspruchs 14 gelöst. Vorteilhafte Weiterbildungen sind in den abhängigen Ansprüchen angegeben.

Bei dem erfindungsgemäßen Verfahren zum Abrastern einer Probe werden mindestens zwei Beleuchtungspunkte zur Bildung eines Punktmusters erzeugt. Das Punktmuster hat eine einstellbare Anzahl von Beleuchtungspunkten. Mindestens ein frei wählbarer Parameter zur Definition des Punktmusters ist voreingestellt oder wird eingestellt. Das durch den frei wählbaren Parameter definierte Punktmuster wird zum Abrastern zumindest eines vorgegebenen Bereichs der Probe entlang einer ersten Richtung zur Erzeugung von den Beleuchtungspunkten des Punktmusters zugeordneten Rasterzeilen und entlang einer zweiten Richtung zur Erzeugung von den Rasterzeilen jeweils nachfolgend erzeugten Rasterzeilen bewegt, wobei die Bewegung des Punktmusters in Richtung der zweiten Richtung in gleich großen Rasterschritten oder mit einer konstanten Geschwindigkeit erfolgt. Die Beleuchtungspunkte des Punktmusters sind auf einer Linie entlang der zweiten Richtung angeordnet.

Das mithilfe des erfindungsgemäßen Verfahrens gebildete Punktmuster ist zum einen durch die einstellbare Anzahl von Beleuchtungspunkten definiert. Zum anderen wird das Punktmuster durch den mindestens einen frei wählbaren Parameter definiert. Hierdurch wird eine flexible Erzeugung eines optimalen Punktmusters für das Abrastern einer Probe ermöglicht. Der mindestens eine frei wählbare Parameter kann bei Durchführung des Verfahrens variabel, vorzugsweise durch eine Bedienperson, eingestellt werden. Alternativ dazu kann der mindestens eine frei wählbare Parameter auch voreingestellt sein.

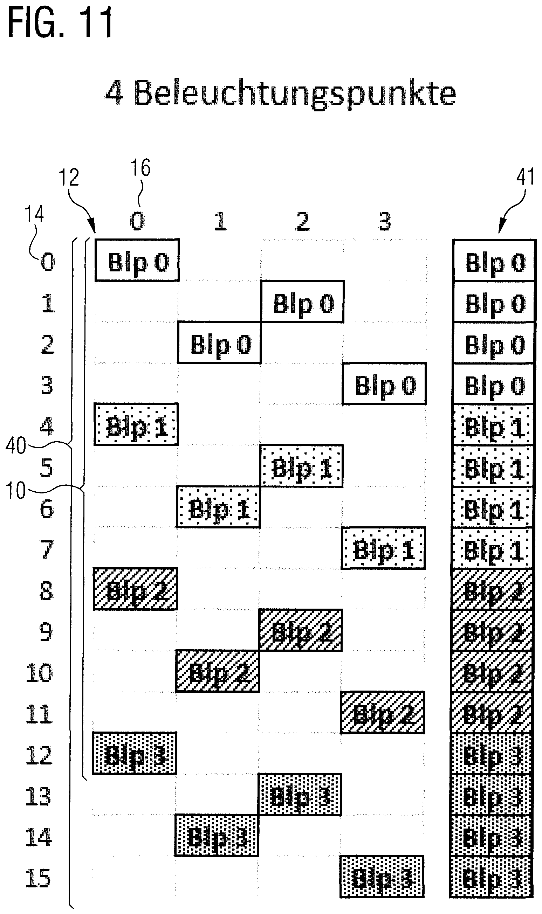

Erfindungsgemäß erfolgt das Bewegen des Punktmusters in der zweiten Richtung in gleich großen Rasterschritten oder mit einer konstanten Geschwindigkeit. Damit soll aber nicht grundsätzlich ausgeschlossen werden, dass das Punktmuster auch entgegen der zweiten Richtung bewegt werden kann. Eine solche Bewegung des Punktmusters entgegen der zweiten Richtung ist beispielsweise in den folgenden drei Fällen vorgesehen. Zum ersten können bei mehreren Rasterdurchläufen sprungartige Rasterschritte entgegen der zweiten Richtung erfolgen. Zum zweiten sind, wie im abhängigen Anspruch 14 und im Ausführungsbeispiel nach Figur 11 angegeben, Weiterbildungen denkbar, in denen der Rasterprozess Rasterschritte entgegen der zweiten Richtung vorsieht. Zum dritten sind auch Rasterprozesse von der erfindungsgemäßen Lehre umfasst, bei denen ein erneutes Abrastern des Bildbereichs entgegen der zweiten Richtung erfolgt, beispielsweise um Lücken aufzufüllen.

In einer vorteilhaften Weiterbildung wird beim Bewegen des Punktmusters entlang der ersten Richtung der vorgegebene Bereich kontinuierlich oder schrittweise abgerastert. Durch die kontinuierliche oder schrittweise Abrasterung werden entlang der ersten Richtung Rasterzeilen abgerastert, die in einem späteren Detektionsverfahren als Grundlage für die Erzeugung von Bildzeilen dienen können.

In einer weiteren vorteilhaften Weiterbildung wird beim Bewegen des Punktmusters entlang der zweiten Richtung der vorgegebene Bereich schrittweise oder kontinuierlich abgerastert. Bei diesem schrittweisen oder kontinuierlichen Abrastern wird das Punktmuster in einem Rasterschritt um mindestens eine Rasterzeile entlang der zweiten Richtung bewegt. Beim schrittweisen Abrastern entlang der zweiten Richtung springt das Punktmuster um eine oder mehrere Rasterzeilen entlang der zweiten Richtung, beispielsweise nachdem es das Ende einer Rasterzeile beim Bewegen entlang der ersten Richtung erreicht hat oder wenigstens eine der Rasterzeilen entlang der ersten Richtung vollständig abgerastert wurde. Beim kontinuierlichen Abrastern entlang der zweiten Richtung bewegt sich das Punktmuster beispielsweise mit gleichbleibender Geschwindigkeit entlang der zweiten Richtung. Insbesondere legt dabei das Punktmuster nach einer Periode in der ersten Richtung (d.h., nachdem es das Ende einer Rasterzeile beim Bewegen entlang der ersten Richtung erreicht hat) in der zweiten Richtung eine Strecke zurück, die dem Rasterschritt entspricht. Vorzugsweise kann der einer Rasterzeile bzw. einem Rasterschritt zugeordnete physikalische Abstand entlang der zweiten Richtung eingestellt werden. Hierdurch kann die Auflösung des Verfahrens entlang der zweiten Richtung auf einfache Weise eingestellt werden.

In einer weiteren vorteilhaften Weiterbildung sind die Beleuchtungspunkte des Punktmusters äquidistant angeordnet oder bilden mindestens zwei Gruppen von Beleuchtungspunkten, wobei die Beleuchtungspunkte jeder der Gruppen äquidistant angeordnet sind. Die äquidistante Anordnung der Beleuchtungspunkte stellt eine besonders einfache Form des Punktmusters dar, während durch die Anordnung der Beleuchtungspunkte in mehreren Gruppen relativ komplexe Punktmuster gebildet werden können, die dahingehend optimiert sind, dass sie einen Kompromiss zwischen Punktmustern mit einem relativ geringen Abstand benachbarter Beleuchtungspunkte und Punktmustern mit einem relativ großen Abstand zwischen benachbarten Beleuchtungspunkten ermöglichen.

In einer weiteren vorteilhaften Weiterbildung werden als der mindestens eine frei wählbare Parameter ein in Rasterzeilen definierter Abstand zwischen den Beleuchtungspunkten des Punktmusters und/oder eine Anzahl von Gruppen von Beleuchtungspunkten des Punktmusters eingestellt. Durch den eingestellten Abstand zwischen den Beleuchtungspunkten wird die Länge des Punktmusters entsprechend definiert. Bei gegebener maximal zulässiger Gesamtlänge des Punktmusters und gegebener Anzahl von Beleuchtungspunkten wird durch diese Einstellmöglichkeit ein flexibles Verfahren erreicht. Ferner wird durch die Einstellung der Anzahl von Gruppen ein hinsichtlich des Kompromisses zwischen Punktmustern mit einem relativ geringen Abstand benachbarter Beleuchtungspunkte und Punktmustern mit einem relativ großen Abstand zwischen benachbarten Beleuchtungspunkten optimales Punktmuster erreicht.

In einer weiteren vorteilhaften Weiterbildung wird als der mindestens eine frei wählbare Parameter ein in Rasterzeilen definierter Abstand zwischen den Beleuchtungspunkten des Punktmusters eingestellt. Dabei wird das Punktmuster zum Abrastern des vorgegebenen Bereichs in mindestens zwei Rasterdurchläufen entlang der ersten und zweiten Richtung bewegt. Durch das Abrastern des vorgegebenen Bereichs in mehreren Rasterdurchläufen, kann die Größe des Punktmusters größer eingestellt werden als es beim Abrastern in nur einem Durchlauf möglich wäre.

In einer weiteren vorteilhaften Weiterbildung wird in jedem der Rasterdurchläufe ein Teil des vorgegebenen Bereichs abgerastert. Die in aufeinanderfolgenden Rasterdurchläufen abgerasterten Teile des vorgegebenen Bereichs sind jeweils um mindestens eine Rasterzeile entlang der zweiten Richtung gegeneinander versetzt. Der vorgegebene Bereich kann somit wie bei einem Zeilensprungverfahren abgerastert werden. In jedem der Rasterdurchläufe wird der vorgegebene Bereich im Wesentlichen vollständig abgerastert, so dass ein Kompromiss, zwischen der Verwendung von vielen Rasterdurchläufen, was zu einer hohen Auflösung des Abrasterverfahrens führt, und einer Verwendung von wenigen Rasterdurchläufen, was zu einer kurzen Dauer des Abrasterverfahrens führt, gefunden wird. Vorteilhafterweise können die jeweils abgerasterten Teile des vorgegebenen Bereichs nach einer Detektion einzeln weiter verarbeitet werden.

In einer weiteren vorteilhaften Weiterbildung erfolgt in jedem der Rasterdurchläufe ein schrittweises Abrastern des vorgegebenen Bereichs entlang der zweiten Richtung, indem das Punktmuster in einem Rasterschritt um eine Anzahl von Rasterzeilen entlang der zweiten Richtung bewegt wird, die gleich dem Produkt der Anzahl von Beleuchtungspunkten des Punktmusters und dem in Rasterzeilen definierten Abstand zwischen den Beleuchtungspunkten des Punktmusters ist. Vorzugsweise sind die in aufeinanderfolgenden Rasterdurchläufen abgerasterten Teile des vorgegebenen Bereichs jeweils um eine Rasterzeile entlang der zweiten Richtung gegeneinander versetzt. Hierdurch wird der vorgegebene Bereich vollständig abgerastert. Die für ein vollständiges Abrastern nötige Anzahl von Rasterdurchläufen ist gleich dem in Rasterzeilen definierten Abstand zwischen den Beleuchtungspunkten des Punktmusters.

In einer weiteren vorteilhaften Weiterbildung wird als der mindestens eine frei wählbare Parameter eine Anzahl von Gruppen von Beleuchtungspunkten des Punktmusters eingestellt. Die eingestellte Anzahl von Gruppen von Beleuchtungspunkten des Punktmusters ist dabei ein Teiler der Anzahl von Beleuchtungspunkten des Punktmusters. Ferner haben die Beleuchtungspunkte jeder Gruppe die gleiche Anzahl. Dies stellt eine einfache Möglichkeit dar, die Beleuchtungspunkte des Punktmusters in Gruppen aufzuteilen.

In einer weiteren vorteilhaften Weiterbildung ist ein in Rasterzeilen definierter Abstand zwischen den Beleuchtungspunkten des Punktmusters, die einer einzigen der Gruppen von Beleuchtungspunkten des Punktmusters zugeordnet sind, gleich der eingestellten Anzahl von Gruppen von Beleuchtungspunkten des Punktmusters. Die einer Gruppe zugeordneten Beleuchtungspunkte sind vorzugsweise äquidistant angeordnet. Hierdurch ist eine einfache Möglichkeit gegeben, die Beleuchtungspunkte innerhalb einer Gruppe anzuordnen.

In einer weiteren vorteilhaften Weiterbildung ist ein Abstand zwischen den Beleuchtungspunkten des Punktmusters, die aufeinanderfolgenden Gruppen von Beleuchtungspunkten des Punktmusters zugeordnet sind, gleich der Summe der eingestellten Anzahl von Gruppen von Beleuchtungspunkten des Punktmusters und Eins. Der Abstand zweier benachbarter Beleuchtungspunkte, die verschiedenen Gruppen zugeordnet sind, ist somit größer als der Abstand zweier benachbarter Beleuchtungspunkte, die der gleichen Gruppe zugeordnet sind. Dies ist eine einfache Möglichkeit, die verschiedenen Gruppen anzuordnen.

In einer weiteren vorteilhaften Weiterbildung erfolgt in einem einzigen Rasterdurchlauf ein schrittweises Abrastern des vorgegebenen Bereichs entlang der zweiten Richtung, indem das Punktmuster in einem Rasterschritt um eine Anzahl von Rasterzeilen entlang der zweiten Richtung bewegt wird, die gleich der Anzahl von Beleuchtungspunkten des Punktmusters ist. Hierdurch wird zum einen ein Kompromiss zwischen der Verwendung relativ kleiner Punktmuster mit der Verwendung relativ großer Punktmustern realisiert. Zum anderen erfolgt die Abrasterung entlang der zweiten Richtung in gleich großen Rasterschritten, was insbesondere bei mechanischen Abrastervorrichtungen einfach realisierbar ist.

Vorzugsweise werden die Beleuchtungspunkte des Punktmusters mithilfe eines akustooptischen Deflektors (AOD) oder mithilfe eines Strahlteilers aus einem Beleuchtungslichtbündel erzeugt. Die Verwendung eines AOD ermöglicht eine einfache und flexible Einstellung der Abstände zwischen den Beleuchtungspunkten und damit der gesamten Breite des Punktmusters. Mithilfe von Strahlteilern lassen sich auch komplexe Punktmuster erzeugen.

In einer weiteren vorteilhaften Weiterbildung wird beim Bewegen des Punktmusters entlang der zweiten Richtung der vorgegebene Bereich schrittweise abgerastert. Bei nachfolgenden Rasterschritten wird das Punktmuster in die zweite Richtung und entgegengesetzt zur zweiten Richtung bewegt. Dadurch kann erreicht werden, dass sich der abgerasterte Bereich der Probe in aufeinanderfolgenden Rasterschritten durch ein Vor- und Zurückspringen des Punktmusters entlang der zweiten Richtung gleichsam immer weiter verfeinert.

Die Erfindung betrifft ferner eine Vorrichtung zum Abrastern einer Probe. Die Vorrichtung umfasst eine Beleuchtungseinheit, die mindestens zwei Beleuchtungspunkte zur Bildung eines Punktmusters erzeugt, wobei das Punktmuster eine einstellbare Anzahl von Beleuchtungspunkten hat. Die Vorrichtung umfasst ferner eine Steuereinheit zum Steuern der Beleuchtungseinheit, wobei die Steuereinheit die Beleuchtungseinheit derart steuert, dass mindestens ein frei wählbarer Parameter zur Definition des Punktmusters eingestellt wird. Die Beleuchtungseinheit bewegt das durch den frei wählbaren Parameter definierte Punktmuster zum Abrastern zumindest eines vorgegebenen Bereichs der Probe entlang einer ersten Richtung zur Erzeugung von den Beleuchtungspunkten des Punktmusters zugeordneten Rasterzeilen und entlang einer zweiten Richtung zur Erzeugung von den Rasterzeilen jeweils nachfolgend erzeugten Rasterzeilen. Die erfindungsgemäße Vorrichtung (Abrastervorrichtung) zum Abrastern einer Probe ermöglicht es, die Probe mithilfe eines anpassbaren Punktmusters abzurastern. Die Vorrichtung ist hierdurch flexibel anpassbar, beispielsweise an verschiedene Detektionseinheiten.

Vorzugsweise umfasst die Beleuchtungseinheit wenigstens einen akustooptischen Deflektor (AOD) oder wenigstens einen Strahlteiler.

Die Erfindung betrifft ferner ein Mikroskop mit einer Vorrichtung zum Abrastern einer Probe nach vorgenannter Art.

Vorzugsweise wird der mindestens eine frei wählbare Parameter durch eine Bedienperson während des Betriebs des Mikroskops eingestellt. Ferner kann der mindestens eine frei wählbare Parameter auch vor Inbetriebnahme des Mikroskops voreingestellt werden.

Anstelle der Einstellung des mindestens einen frei wählbaren Parameters durch eine Bedienperson kann derselbe auch auf Basis eines Algorithmus, der den mindestens einen frei wählbaren Parameter aus weiteren, beispielsweise von einer Bedienperson selektiv einstellbaren Parametern (wie z.B. Bildwiederholrate, Anregungswellenlänge des Beleuchtungslichtbündels oder Eindringtiefe) bestimmt, eingestellt werden.

Die Anzahl von Beleuchtungspunkten des Punktmusters kann voreingestellt sein oder während des Betriebs eingestellt werden.

Weitere Merkmale und Vorteile der Erfindung ergeben sich aus der folgenden Beschreibung, welche die Erfindung anhand von Ausführungsbeispielen im Zusammenhang mit den beigefügten Figuren näher erläutert.

Es zeigen:
- Figur 1: ein Ausführungsbeispiel eines Verfahrens zum Abrastern einer Probe;
- Figur 2: ein Ausführungsbeispiel eines Verfahrens zum Abrastern der Probe mit zwei Beleuchtungspunkten, bei dem ein Abstand zwischen zwei benachbarten Beleuchtungspunkten auf zwei Rasterzeilen eingestellt wurde;
- Figur 3: ein Ausführungsbeispiel eines Verfahrens zum Abrastern der Probe mit drei Beleuchtungspunkten, bei dem der Abstand zwischen zwei benachbarten Beleuchtungspunkten auf zwei Rasterzeilen eingestellt wurde;
- Figur 4: ein Ausführungsbeispiel eines Verfahrens zum Abrastern der Probe mit zwei Beleuchtungspunkten, bei dem der Abstand zwischen zwei benachbarten Beleuchtungspunkten auf drei Rasterzeilen eingestellt wurde;
- Figur 5: ein Ausführungsbeispiel eines Verfahrens zum Abrastern der Probe mit drei Beleuchtungspunkten, bei dem der Abstand zwischen zwei benachbarten Beleuchtungspunkten auf vier Rasterzeilen eingestellt wurde;
- Figur 6: ein Ausführungsbeispiel eines Verfahrens zum Abrastern der Probe mit vier Beleuchtungspunkten, bei dem eine Anzahl von Gruppen von Beleuchtungspunkten auf zwei eingestellt wurde;
- Figur 7: ein Ausführungsbeispiel eines Verfahrens zum Abrastern der Probe mit sechs Beleuchtungspunkten, bei dem die Anzahl von Gruppen von Beleuchtungspunkten auf zwei eingestellt wurde;
- Figur 8: ein Ausführungsbeispiel eines Verfahrens zum Abrastern der Probe mit sechs Beleuchtungspunkten, bei dem die Anzahl von Gruppen von Beleuchtungspunkten drei eingestellt wurde;
- Figur 9: ein Ausführungsbeispiel eines Verfahrens zum Abrastern der Probe mit neun Beleuchtungspunkten, bei dem die Anzahl von Gruppen von Beleuchtungspunkten auf drei eingestellt wurde;
- Figur 10: ein Ausführungsbeispiel eines Verfahrens zum Abrastern der Probe mit acht Beleuchtungspunkten, bei dem die Anzahl von Gruppen von Beleuchtungspunkten auf vier eingestellt wurde;
- Figur 11: ein Ausführungsbeispiel eines Verfahrens zum Abrastern der Probe mit vier Beleuchtungspunkten;
- Figur 12: einen Graphen, der verschiedene Ausführungsbeispiele eines Verfahrens zum Abrastern der Probe und Verfahren nach dem Stand der Technik miteinander vergleicht;
- Figur 13: ein Ausführungsbeispiel eines Mikroskops mit einer Kameradetektion;
- Figur 14: ein weiteres Ausführungsbeispiel eines als Konfokalmikroskop ausgebildeten Mikroskops;
- Figur 15: ein Verfahren zum Abrastern einer Probe nach dem Stand der Technik;
- Figur 16: ein weiteres Verfahren zum Abrastern der Probe nach dem Stand der Technik;
- Figur 17: ein weiteres Verfahren zum Abrastern der Probe nach dem Stand der Technik;
- Figur 18: ein weiteres Verfahren zum Abrastern der Probe nach dem Stand der Technik mit drei Beleuchtungspunkten; und
- Figur 19: das bekannte Verfahren zum Abrastern der Probe nach Figur 18 mit vier Beleuchtungspunkten.

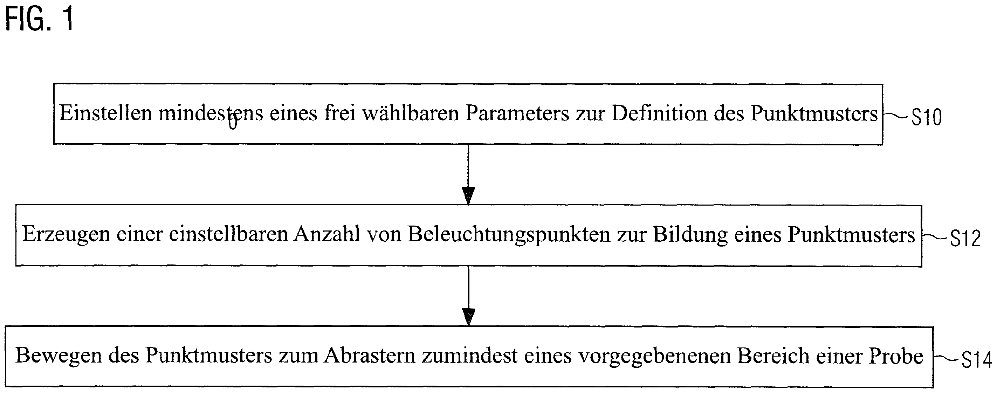

Figur 1 zeigt ein Ausführungsbeispiel eines Verfahrens zum Abrastern einer Probe 100. In einem Schritt S10 wird durch eine Bedienperson mindestens ein frei wählbarer Parameter zur Definition eines Punktmusters 10 eingestellt. In einem Schritt S12 wird eine einstellbare Anzahl von Beleuchtungspunkten, die im Folgenden allgemein mit dem Bezugszeichen 12 versehen sind, erzeugt. In einem Schritt S14 wird das Punktmuster, das im Folgenden allgemein mit dem Bezugszeichen 10 versehen wird, zum Abrastern zumindest eines vorgegebenen Bereichs 40 der Probe 100 bewegt. Die Bewegung des Punktmusters 10 erfolgt dabei entlang einer ersten Richtung zur Erzeugung von den Beleuchtungspunkten 12 des Punktmusters 10 zugeordneten Rasterzeilen, die im Folgenden allgemein mit dem Bezugszeichen 14 versehen sind, und entlang einer zweiten Richtung zur Erzeugung von den Rasterzeilen 14 jeweils nachfolgend erzeugten Rasterzeilen 14.

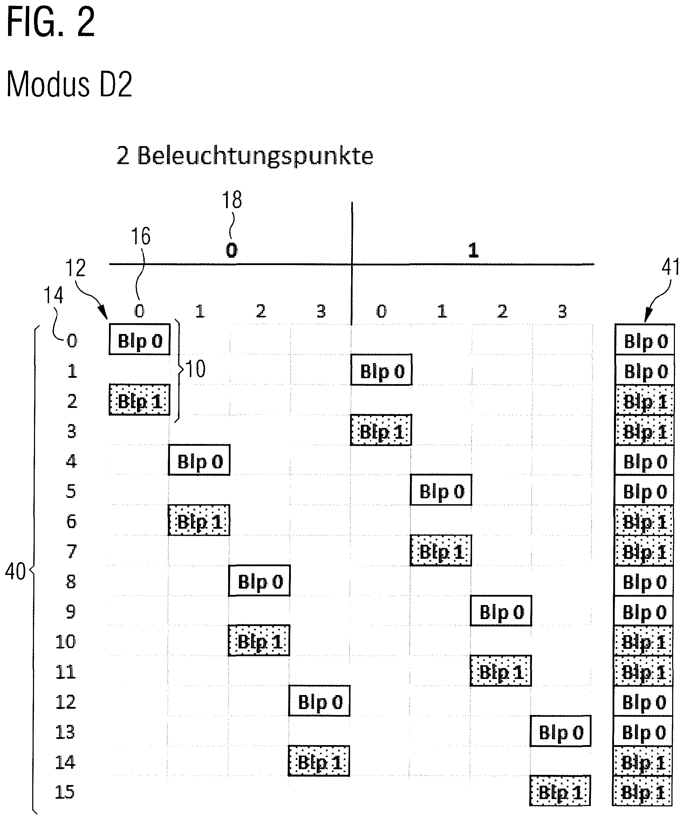

Die Figuren 2 bis 11 zeigen Ausführungsbeispiele eines Verfahrens zum Abrastern der Probe 100, bei denen beim Bewegen des Punktmusters 10 in Schritt S14 wenigstens der vorgegebene Bereich ("region of interest"; ROI) 40 entlang der ersten Richtung kontinuierlich abgerastert und entlang der zweiten Richtung schrittweise abgerastert wird. Das schrittweise Abrastern des vorgegebenen Bereichs 40 entlang der zweiten Richtung erfolgt in Rasterschritten, die allgemein mit dem Bezugszeichen 16 versehen sind.

In den Figuren 2 bis 11 sind die Positionen der Beleuchtungspunkte ("Blp") 12, die mit 0 beginnend durchnummeriert sind, entlang der zweiten Richtung, d.h. in den Figuren 2 bis 11 von oben nach unten, in zeitlich aufeinander folgenden Rasterschritten 16 gezeigt, die mit 0 beginnend durchnummeriert sind. Durch die Ausführungsbeispiele wird jeweils ein Rasterbereich 41 überfahren, der in den Figuren 2 bis 11 ganz rechts dargestellt ist. Dabei ist jeweils angegeben, welche Rasterzeile 14 von welchem Beleuchtungspunkt 12 abgerastert wurde.

Die Figuren 2 bis 5 zeigen Ausführungsbeispiele eines Verfahrens zum Abrastern der Probe 100, bei denen als frei wählbarer Parameter ein Abstand zweier benachbarter Beleuchtungspunkte 12 des Punktmusters 10 in Rasterzeilen eingestellt wird. Die in den Figuren 2 bis 5 gezeigten Modi der Ausführungsbeispiele sind mit Dm bezeichnet, wobei m der frei wählbare Parameter, d.h. hier der Abstand zweier benachbarter Beleuchtungspunkte 12 des Punktmusters 10 in Rasterzeilen, ist. Die Beleuchtungspunkte 12 des Punktmusters 10 sind äquidistant auf einer Linie entlang der zweiten Richtung angeordnet.

Das Punktmuster 10 wird zum Abrastern des vorgegebenen Bereichs 40 der Probe 100 in mehreren Rasterdurchläufen, die hier allgemein mit dem Bezugszeichen 18 versehen und mit 0 beginnend durchnummeriert sind, entlang der ersten Richtung und entlang der zweiten Richtung bewegt. In jedem der Rasterdurchläufe 18 wird ein Teil des vorgegebenen Bereichs 40 abgerastert. Die in aufeinanderfolgenden Rasterdurchläufen 18 abgerasterten Teile des vorgegebenen Bereichs 40 sind jeweils um eine Rasterzeile 14 entlang der zweiten Richtung gegeneinander versetzt. Insgesamt wird eine Anzahl von Rasterdurchläufen 18 durchgeführt, die gleich dem Abstand zweier benachbarter Beleuchtungspunkte 12 des Punktmusters 10 in Rasterzeilen ist. Vorteilhafterweise können in jedem der Rasterdurchläufe 18 beispielsweise durch Detektion gewonnene Ergebnisse einzeln verwertet werden.

Das schrittweise Abrastern der Teile des vorgegebenen Bereichs 40 entlang der zweiten Richtung erfolgt, indem das Punktmuster 10 in jedem Rasterschritt um eine Anzahl von Rasterzeilen 14 entlang der zweiten Richtung bewegt wird, die gleich dem Produkt der Anzahl von Beleuchtungspunkten 12 des Punktmusters 10 und dem in Rasterzeilen 14 definierten Abstand zwischen den Beleuchtungspunkten 12 des Punktmusters 10 ist.

Figur 2 zeigt ein Ausführungsbeispiel des Verfahrens zum Abrastern der Probe 100 mit zwei Beleuchtungspunkten 12, bei dem der Abstand zwischen zwei benachbarten Beleuchtungspunkten 12 auf zwei Rasterzeilen 14 eingestellt wurde. Der vorgegebene Bereich 40 wird in zwei Rasterdurchläufen 18 vollständig abgerastert, wobei die Positionen der Beleuchtungspunkte beim zweiten Rasterdurchlauf 18 (mit 1 nummeriert) gegenüber dem ersten Rasterdurchlauf 18 (mit 0 nummeriert) um eine Rasterzeile 14 versetzt sind.

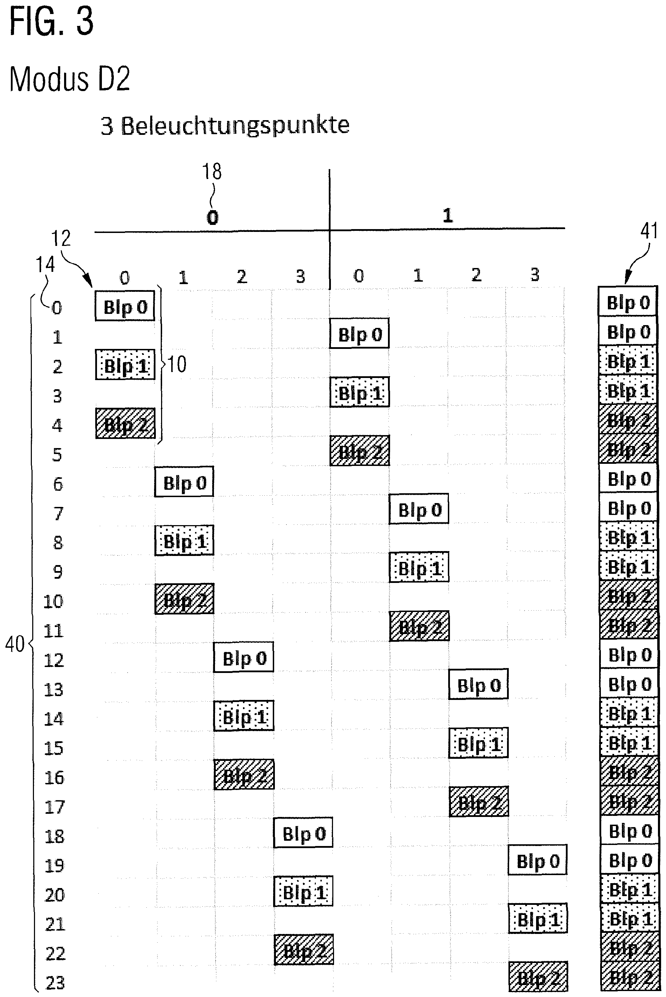

Figur 3 zeigt ein Ausführungsbeispiel des Verfahrens zum Abrastern der Probe 100 mit drei Beleuchtungspunkten 12, bei dem ein Abstand zwischen zwei benachbarten Beleuchtungspunkten 12 auf zwei Rasterzeilen 14 eingestellt wurde. Auch hier wird der vorgegebene Bereich 40 in zwei Rasterdurchläufen 18 vollständig abgerastert. Die Positionen der Beleuchtungspunkte sind beim zweiten Rasterdurchlauf 18 (mit 1 nummeriert) gegenüber dem ersten Rasterdurchlauf 18 (mit 0 nummeriert) um eine Rasterzeile 14 versetzt.

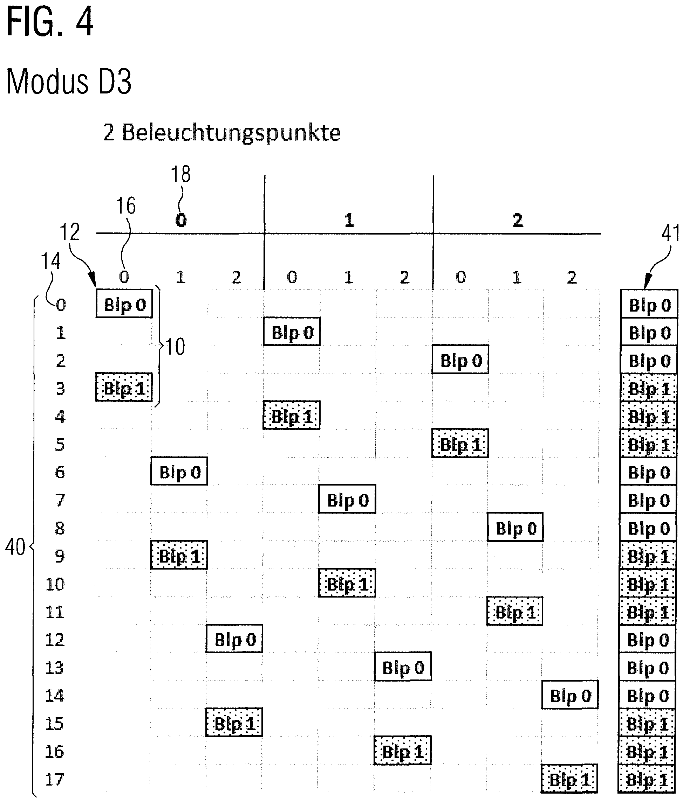

Figur 4 zeigt ein Ausführungsbeispiel des Verfahrens zum Abrastern der Probe 100 mit zwei Beleuchtungspunkten 12, bei dem ein Abstand zwischen zwei benachbarten Beleuchtungspunkten 12 auf drei Rasterzeilen 14 eingestellt wurde. Zur vollständigen Abrasterung des vorgegebenen Bereichs 40 sind hier drei Rasterdurchläufe 18 erforderlich. Die Positionen der Beleuchtungspunkte sind bei aufeinanderfolgenden Rasterdurchläufen 18 um eine Rasterzeile 14 versetzt.

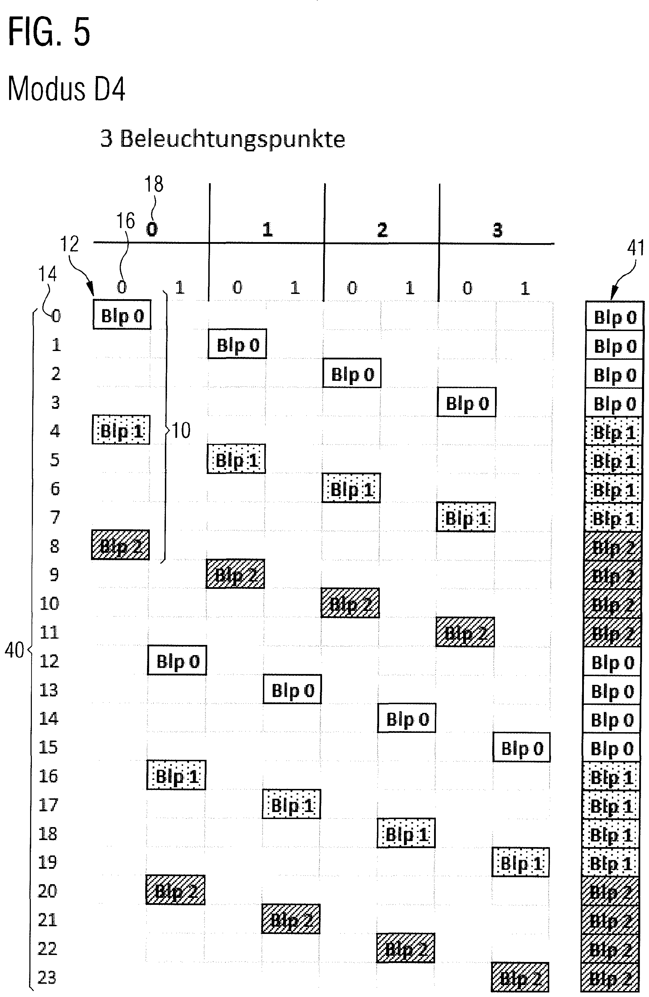

Figur 5 zeigt ein Ausführungsbeispiel des Verfahrens zum Abrastern der Probe 100 mit drei Beleuchtungspunkten 12, bei dem ein Abstand zwischen zwei benachbarten Beleuchtungspunkten 12 auf vier Rasterzeilen 14 eingestellt wurde. Hier wird der vorgegebene Bereich 40 in vier Rasterdurchläufen 18 vollständig abgerastert, und die Positionen der Beleuchtungspunkte sind bei aufeinanderfolgenden Rasterdurchläufen 18 um eine Rasterzeile 14 versetzt.

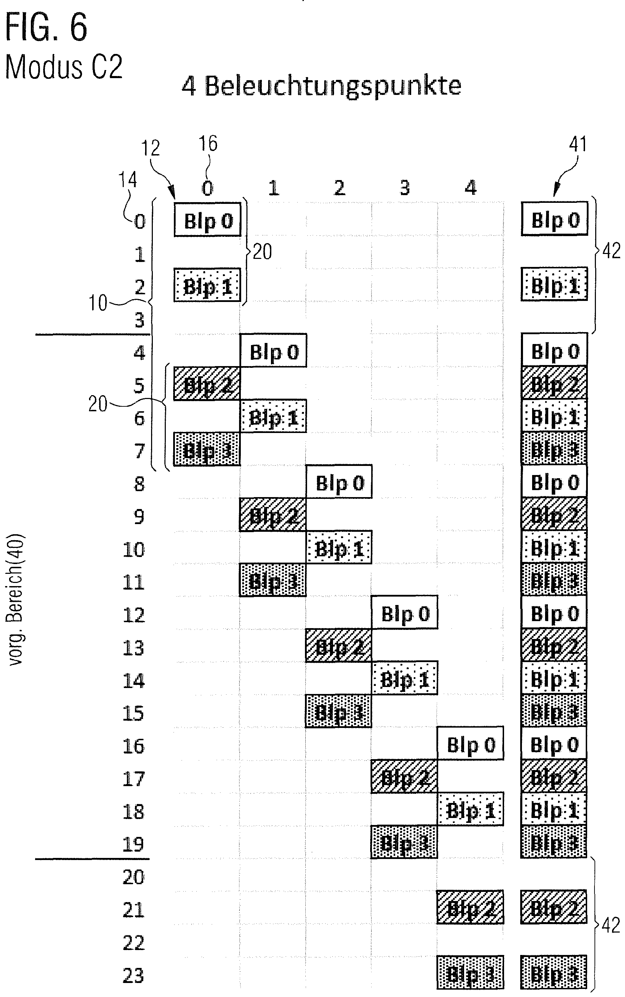

Die Figuren 6 bis 10 zeigen Ausführungsbeispiele des Verfahrens zum Abrastern der Probe 100, bei denen als frei wählbarer Parameter eine Anzahl von Gruppen, die allgemein mit dem Bezugszeichen 20 versehen sind, von Beleuchtungspunkten 12 des Punktmusters 10 eingestellt wird. Die in den Figuren 6 bis 10 gezeigten Modi der Ausführungsbeispiele sind mit Cm bezeichnet, wobei m der frei wählbare Parameter, d.h. hier die Anzahl von Gruppen 20 von Beleuchtungspunkten 12 des Punktmusters 10, ist.

Die eingestellte Anzahl von Gruppen 20 von Beleuchtungspunkten 12 des Punktmusters 10 ist ein Teiler der Anzahl von Beleuchtungspunkten 12 des Punktmusters 10. Die Anzahl an jeweils einer Gruppe 20 zugeordneten Beleuchtungspunkten 12 ist gleich. Die Beleuchtungspunkte 12 jeder der Gruppen 20 sind äquidistant auf einer Linie entlang der zweiten Richtung angeordnet. Der Abstand in Rasterzeilen 14 benachbarter Beleuchtungspunkte 12 des Punktmusters 10, die einer einzigen Gruppe 20 von Beleuchtungspunkten 12 des Punktmusters 10 zugeordnet sind, ist gleich der eingestellten Anzahl von Gruppen 20 von Beleuchtungspunkten 12 des Punktmusters 10. Der Abstand in Rasterzeilen 14 benachbarter Beleuchtungspunkte 12 des Punktmusters 10, die aufeinanderfolgenden Gruppen 20 von Beleuchtungspunkten 12 des Punktmusters 10 zugeordnet sind, ist gleich der Summe der eingestellten Anzahl von Gruppen 20 von Beleuchtungspunkten 12 des Punktmusters 10 und Eins.

Das schrittweise Abrastern entlang der zweiten Richtung erfolgt, indem das Punktmuster 10 in jedem Rasterschritt 16 um eine Anzahl von Rasterzeilen 14 entlang der zweiten Richtung bewegt wird, die gleich der Anzahl von Beleuchtungspunkten 12 des Punktmusters 10 ist. Dabei wird entlang der zweiten Richtung ein Bereich 41 abgerastert, der größer ist als der vorgegebene Bereich 40, da am Rand 42 des abgerasterten bzw. beleuchteten Bereichs Lücken verbleiben.

Figur 6 zeigt ein Ausführungsbeispiel des Verfahrens zum Abrastern der Probe 100 mit vier Beleuchtungspunkten 12, bei dem die Anzahl von Gruppen 20 von Beleuchtungspunkten 12 auf zwei eingestellt wurde. Innerhalb der Gruppen 20 beträgt der Abstand zwischen zwei benachbarten Beleuchtungspunkten 12 zwei Rasterzeilen. Zwischen den Gruppen beträgt der Abstand drei Rasterzeilen 14. Die Schrittweite beträgt in jedem Rasterschritt 16 vier Rasterzeilen 14. Wie in Figur 6 gezeigt, wird ein etwas größerer Bereich 41 als der vorgegebene Bereich 40 beleuchtet, da am Rand 42 des beleuchteten Bereichs 41 Lücken verbleiben.

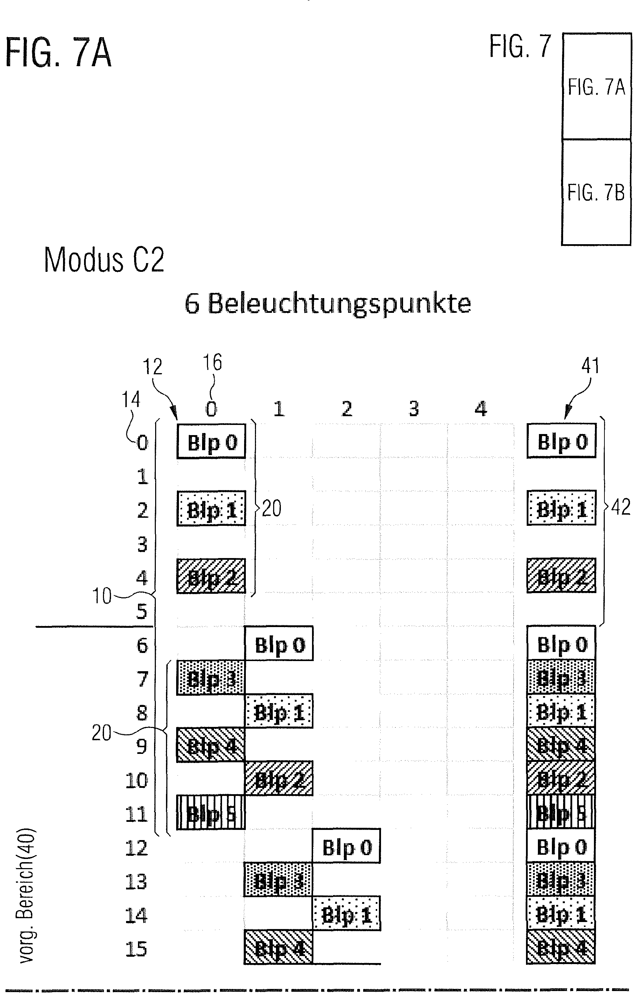

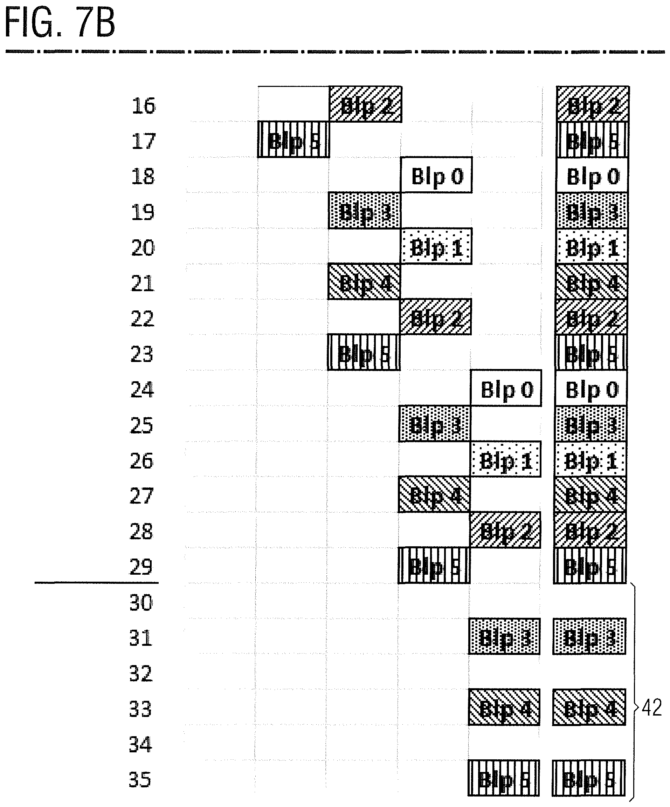

Figur 7 zeigt ein Ausführungsbeispiel des Verfahrens zum Abrastern der Probe 100 mit sechs Beleuchtungspunkten 12, bei dem die Anzahl von Gruppen 20 von Beleuchtungspunkten 12 auf zwei eingestellt wurde. Innerhalb der Gruppen 20 beträgt der Abstand zwischen zwei benachbarten Beleuchtungspunkten 12 wie im vorgenannten Ausführungsbeispiel zwei Rasterzeilenzeilen 14. Zwischen den Gruppen beträgt der Abstand drei Rasterzeilen 14. Die Schrittweite beträgt hier jedoch in jedem Rasterschritt 16 sechs Rasterzeilen 14. Auch hier verbleiben am Rand 42 des beleuchteten Bereichs 41 Lücken.

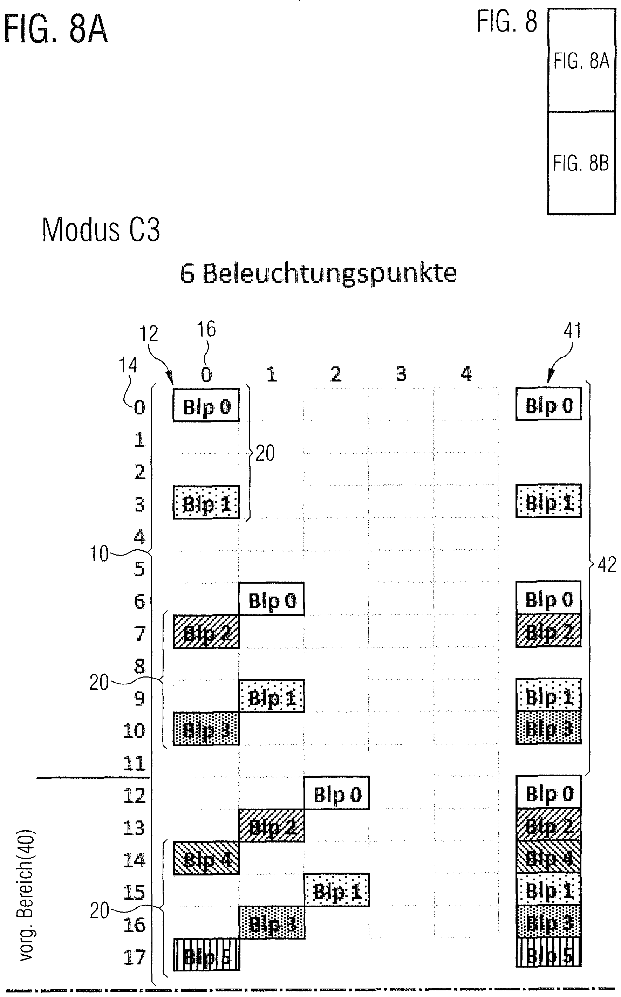

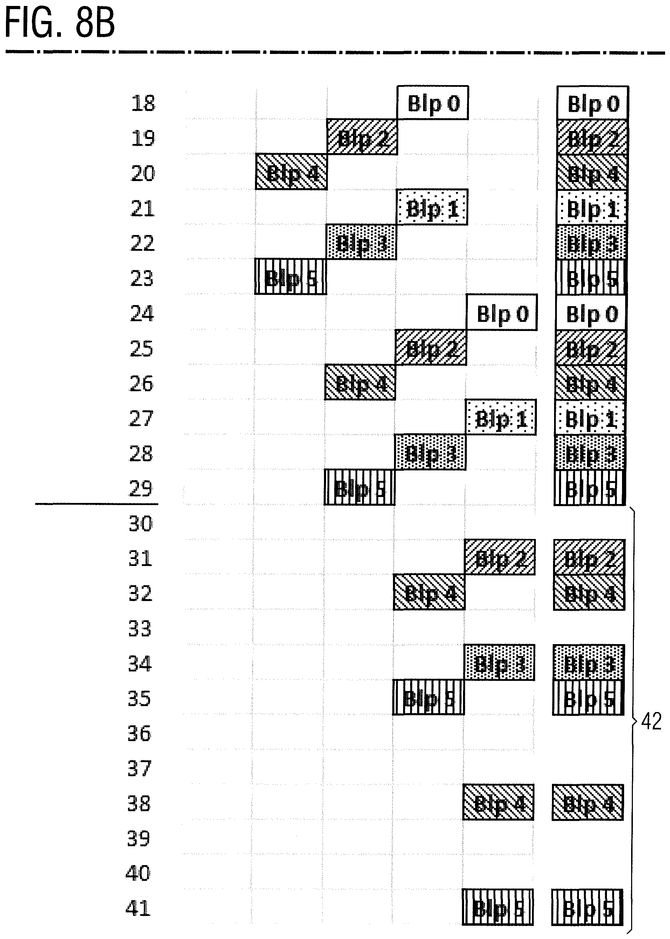

Figur 8 zeigt ein Ausführungsbeispiel des Verfahrens zum Abrastern der Probe 100 mit sechs Beleuchtungspunkten 12, bei dem die Anzahl Gruppen 20 von Beleuchtungspunkten 12 auf drei eingestellt wurde. Innerhalb der Gruppen 20 beträgt der Abstand zwischen zwei benachbarten Beleuchtungspunkten 12 entsprechend der Anzahl von Gruppen 20 drei Rasterzeilen 14. Zwischen den Gruppen 20 beträgt der Abstand vier Rasterzeilen 14. Die Schrittweite beträgt in jedem Rasterschritt 16 sechs Rasterzeilen 14. Auch hier verbleiben am Rand 42 des beleuchteten Bereichs 41 Lücken.

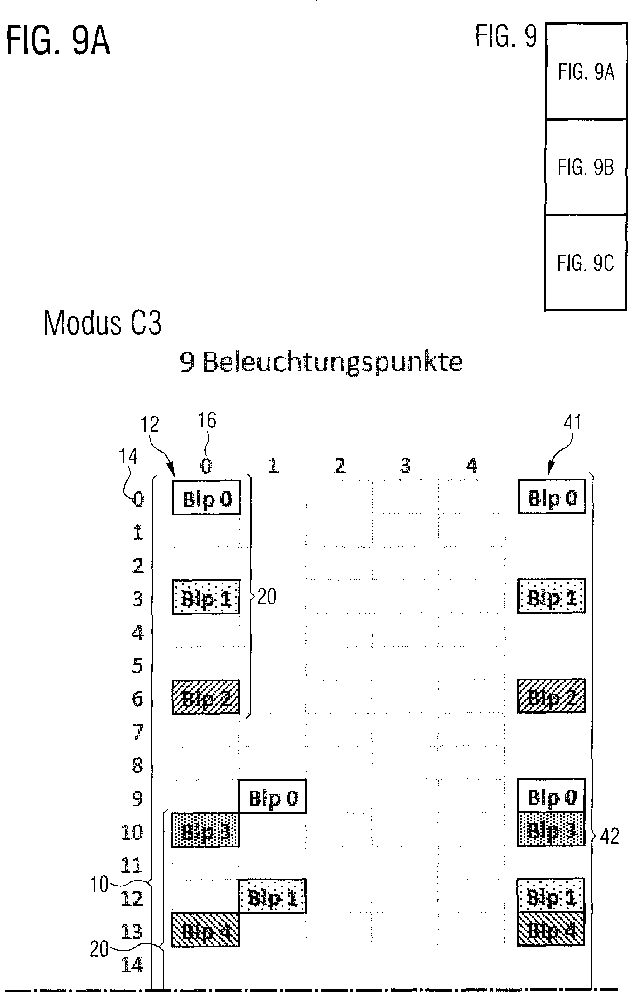

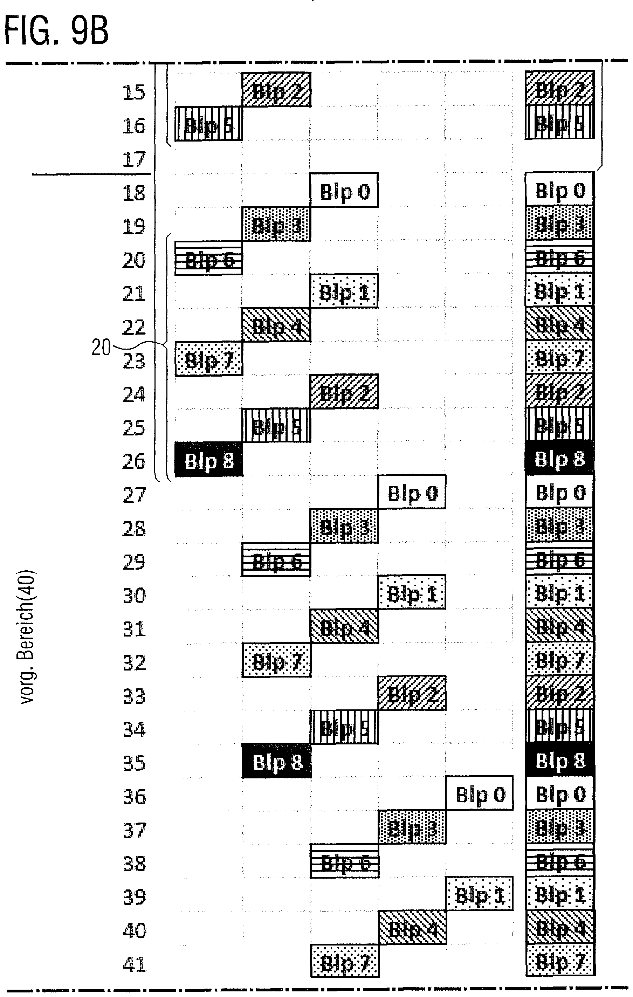

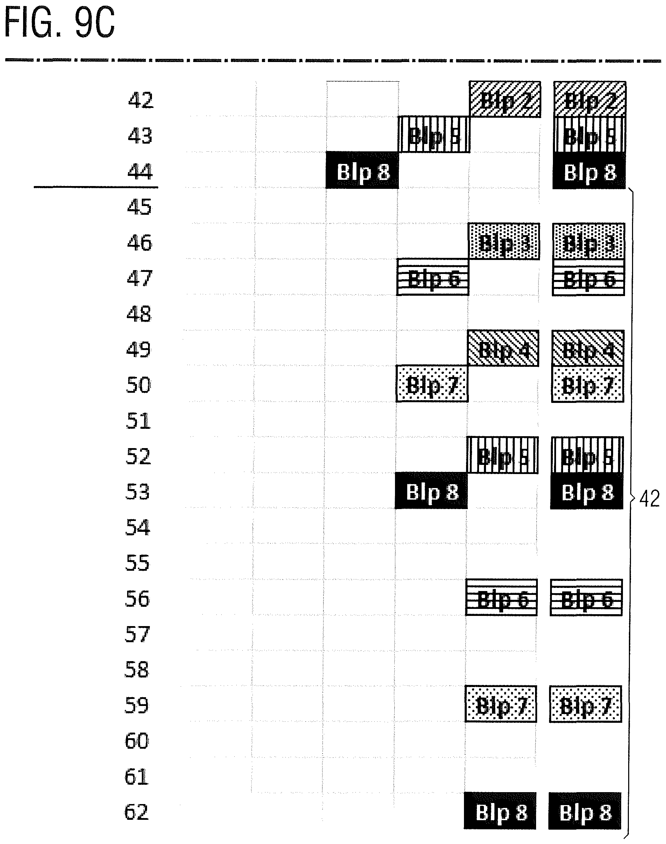

Figur 9 zeigt ein Ausführungsbeispiel des Verfahrens zum Abrastern der Probe 100 mit neun Beleuchtungspunkten 12, bei dem die Anzahl von Gruppen 20 von Beleuchtungspunkten 12 auf drei eingestellt wurde. Wie im vorgenannten Ausführungsbeispiel beträgt der Abstand zwischen zwei benachbarten Beleuchtungspunkten 12 innerhalb der Gruppen 20 drei Rasterzeilen 14. Zwischen den Gruppen 20 beträgt der Abstand vier Rasterzeilen 14. Die Schrittweite beträgt hier jedoch in jedem Rasterschritt 16 neun Rasterzeilen. Auch hier verbleiben am Rand 42 des beleuchteten Bereichs 41 Lücken.

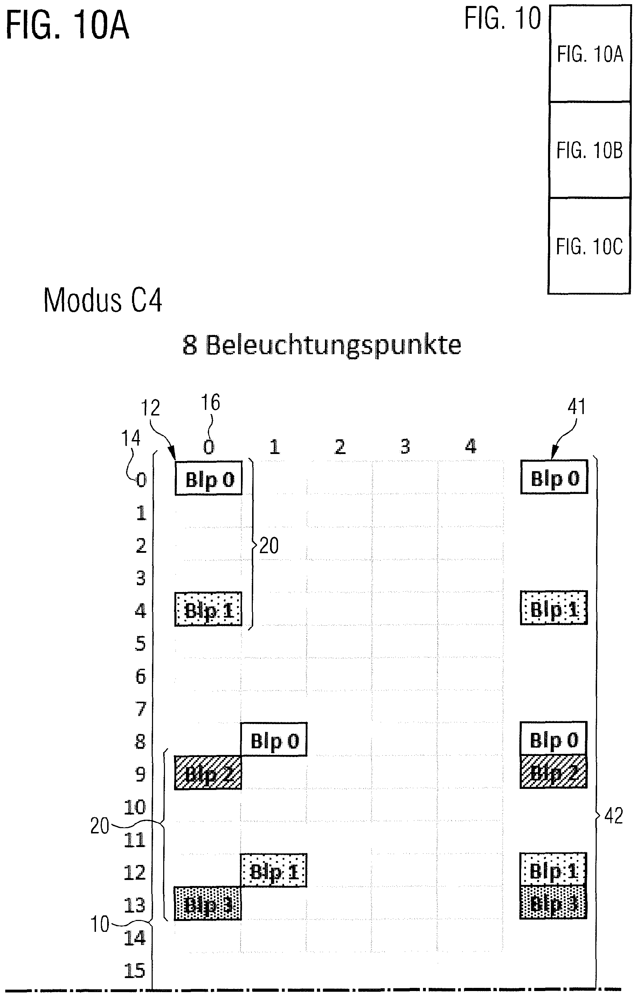

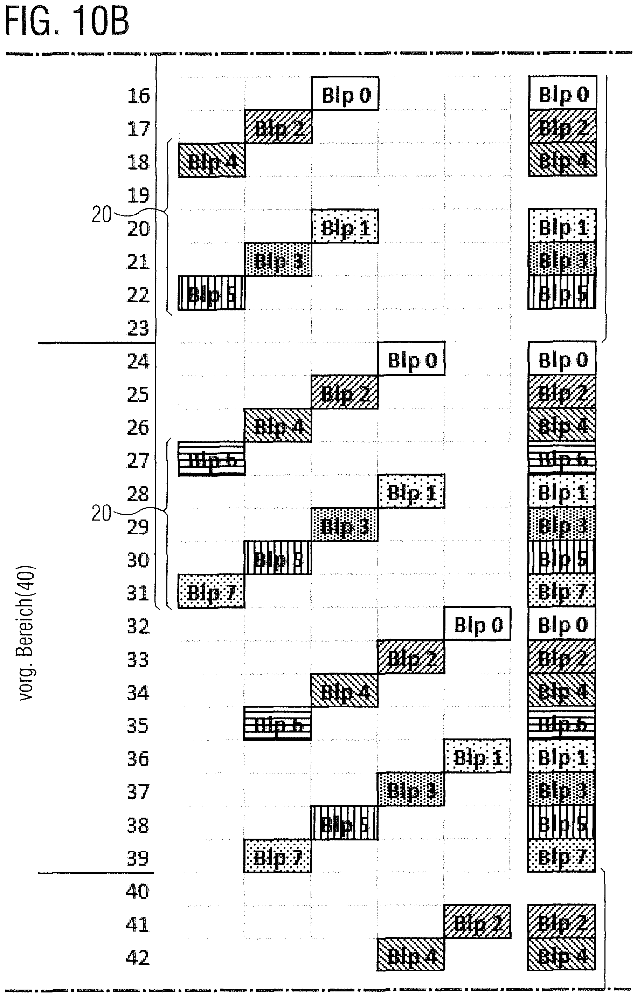

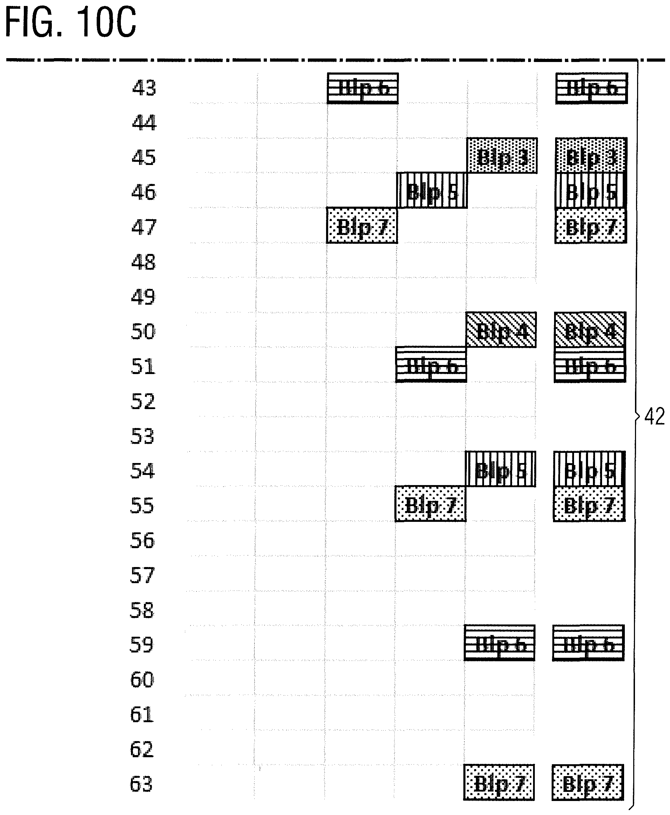

Figur 10 zeigt ein Ausführungsbeispiel des Verfahrens zum Abrastern der Probe 100 mit acht Beleuchtungspunkten 12, bei dem die Anzahl von Gruppen 20 von Beleuchtungspunkten 12 auf vier eingestellt wurde. Der Abstand zwischen zwei benachbarten Beleuchtungspunkten 12 innerhalb der Gruppen 20 beträgt vier Rasterzeilen 14. Zwischen den Gruppen 20 beträgt der Abstand fünf Rasterzeilen. Die Schrittweite beträgt in jedem Rasterschritt 16 acht Rasterzeilen. Auch hier verbleiben am Rand 42 des beleuchteten Bereichs Lücken.

Figur 11 zeigt ein Ausführungsbeispiel des Verfahrens zum Abrastern der Probe 100, bei dem die Anzahl von Rasterzeilen 14 entlang der zweiten Richtung, die das Punktmuster 10 in jedem Rasterschritt 16 bewegt wird, in aufeinander folgenden Rasterschritten 16 verschieden ist. Dabei wird das Punktmuster 10 in aufeinanderfolgenden Rasterschritten 16 in entgegengesetzte Richtungen bewegt, so dass das Punktmuster 10 gleichsam entlang der zweiten Richtung vor- und zurückspringt. Dadurch kann erreicht werden, dass sich der abgerasterte Bereich der Probe 100 in aufeinanderfolgenden Rasterschritten 16 gleichsam immer weiter verfeinert. Dies ist vorteilhaft, da so eine Anpassung dahingehend erfolgen kann, ob der vorgegebene Bereich 40 der Probe 100 mit einer hohen Auflösung abgerastert wird, was mehr Rasterschritte 16 erfordert, oder ob die Dauer des Verfahrens zum Abrastern der Probe 100 verkürzt wird, indem weniger Rasterschritte 16 durchgeführt werden.

Anhand der Figuren 2 bis 11 wurden mehrere Ausführungsbeispiele des Verfahrens zum Abrastern einer Probe 100 beschrieben, die unter verschiedenen Randbedingungen besonders vorteilhaft sein können. Jedes der Ausführungsbeispiele hat neben der Anzahl von Beleuchtungspunkten 12 wenigstens einen weiteren frei wählbaren Parameter "m". Zur Unterscheidung wird hier auch die Notation D2, D3, D4, ..., Dm für die in den Figuren 2 bis 5 beschriebenen Ausführungsbeispiele bzw. C2, C3, C4, ..., Cm für die in den Figuren 6 bis 10 beschriebenen Ausführungsbeispiele benutzt. Durch die Vielzahl an möglichen Kombinationen gemäß Ausführungsbeispielen, insbesondere der Anzahl von Beleuchtungspunkten 12 und frei wählbarem Parameter "m" ergibt sich eine große Flexibilität, so dass für unterschiedliche Ausgangslagen (d.h. vorgegebener Bereich 40, Eigenschaften einer Abrastervorrichtung 60 etc.) ein optimaler Modus eingestellt werden kann.

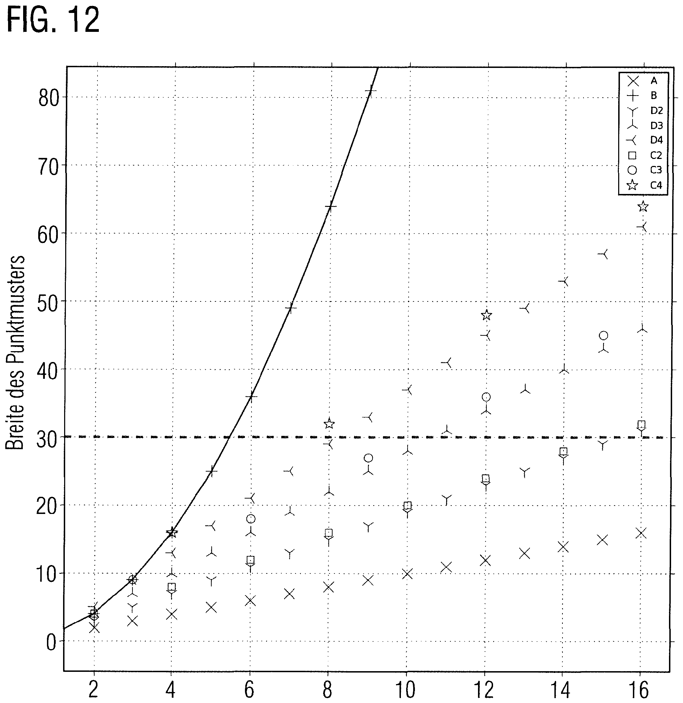

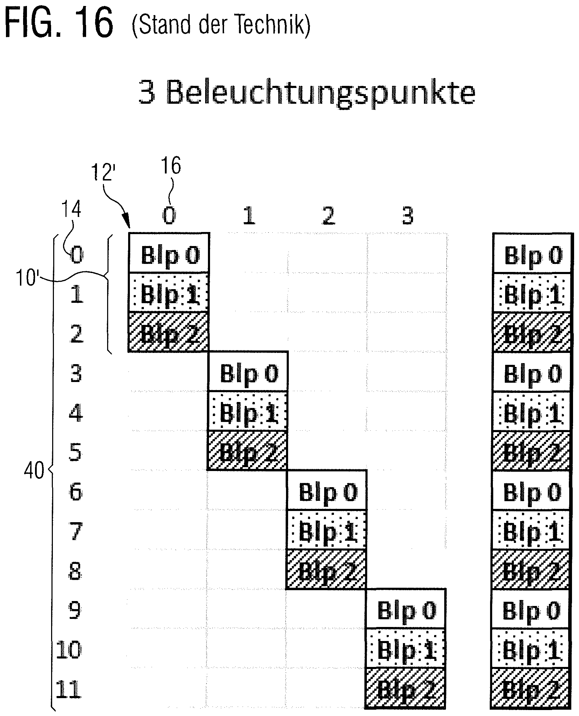

Figur 12 zeigt einen Graphen, der verschiedene Ausführungsbeispiele des Verfahrens zum Abrastern der Probe 100 und Verfahren nach dem Stand der Technik miteinander vergleicht. Der Graph zeigt die Gesamtbreite des Punktmusters 10 gemessen in Rasterzeilen 14 als Funktion der Anzahl n an Beleuchtungspunkten 12 für verschiedene Modi D2, D3, D4 und C2, C3, C4 des Verfahrens sowie zweier aus dem Stand der Technik bekannter Modi A und B, die weiter unten im Zusammenhang mit den Figuren 16 bzw. 18 und 19 näher erläutert sind.

In Figur 12 ist deutlich zu erkennen, dass sowohl mit Modus D als auch mit Modus C eine flexible Wahl des Abstands zwischen zwei benachbarten Beleuchtungspunkten 12 möglich ist. Erlaubt das optische System beispielsweise eine maximale Breite des Punktmuster 10 von 30 Rasterzeilen (gestrichelte Linie), kann für eine Anzahl n = 8...16 von Beleuchtungspunkten 12 ein Modus eingestellt werden, so dass sich unter den gegebenen Umständen ein maximaler Abstand zwischen zwei benachbarten Beleuchtungspunkten 12 ergibt.

Ferner ist in Figur 12 deutlich zu erkennen, dass der Modus D noch flexibler als der Modus C ist, da für jede eingestellte Anzahl von Beleuchtungspunkten 12 alle Modi D2, D3, ... eingestellt werden können. Allerdings hat der Modus D gegenüber dem Modus C den Nachteil, dass die Schrittweite eines Rasterschritts 16 sehr groß werden kann. Im Modus C ist diese Schrittweite in Rasterzeilen 14 immer gleich der Anzahl an Beleuchtungspunkten 12, während sie im Modus D gleich dem Produkt aus der Anzahl an Beleuchtungspunkten 12 und dem in Rasterzeilen 14 angegebenen Abstand benachbarter Beleuchtungspunkte 12 ist. Folglich ist die Schrittweite eines Rasterschritts 14 im Modus D mindestens doppelt so groß wie im Modus C, wenn der frei wählbare Parameter auf denselben Wert eingestellt ist. Ferner erfordert der Modus D, mehrere Rasterdurchläufe um aus dem Abrastern ein einzelnes Bild aufzubauen. Dadurch wird die maximale Rate an durchführbaren Verfahren pro Zeiteinheit begrenzt.

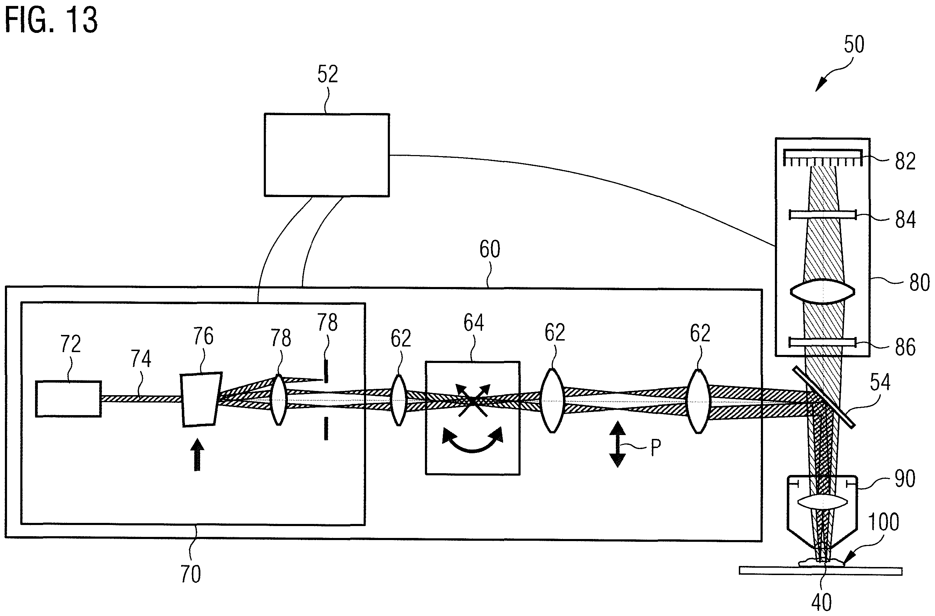

Figur 13 zeigt ein Ausführungsbeispiel eines Mikroskops 50. Das Mikroskop 50 umfasst eine Steuereinheit 52, eine Abrastervorrichtung 60, mit dessen Hilfe das erfindungsgemäße Verfahren durchführbar ist, einen dichroitischen Spiegel 54, eine Detektionseinheit 80 und eine Objektivoptik 90. In das Mikroskop 50 ist eine Probe 100 einbringbar.

Die Abrastervorrichtung 60 weist eine Beleuchtungseinheit 70 zur Erzeugung von Beleuchtungspunkten 12, Ablenkelemente zum Abrastern des vorgegebenen Bereichs 40, die hier allgemein mit 64 bezeichnet werden, wie beispielsweise Galvanometer-spiegel, und weitere optische Elemente auf, die hier allgemein mit 62 bezeichnet werden, wie beispielsweise Linsen, Linsensysteme und Blenden.

Die Beleuchtungseinheit 70 umfasst eine Lichtquelle 72, die ein Beleuchtungslichtbündel 74 erzeugt, eine Einheit 76 zum Aufspalten des Beleuchtungslichtbündels 74 in eine durch eine Bedienperson einstellbare Anzahl von Beleuchtungspunkten 12, beispielsweise einen Strahlteiler oder einen AOD, und mehrere weitere optische Elemente, die hier allgemein mit 78 bezeichnet werden, wie beispielsweise Linsen, Linsensysteme und Blenden. Beispielsweise kann die Beleuchtungseinheit 70 eine zweite Einheit zum weiteren Aufspalten des Beleuchtungslichtbündels 74 umfassen. Hierdurch können auch komplexere zweidimensionale Punktmuster 10 erzeugt werden. Bei dem von der Lichtquelle 72 erzeugten Beleuchtungslichtbündel 74 kann es sich insbesondere um ein Bündel aus Licht (z.B. Laserlicht) handeln, welches die Probe 100 zur Emission von Fluoreszenzlicht anregt.

Insbesondere die Einheit 76 zum Aufspalten des Beleuchtungslichtbündels 74 und die weiteren optischen Elemente 78 der Beleuchtungseinheit 70 werden durch die Steuereinheit 52 derart gesteuert, dass aus den Beleuchtungspunkten 12 ein Punktmuster 10 gemäß dem wenigstens einen eingestellten freien Parameter erzeugt wird. Vorzugsweise wird auch die Lichtquelle 72 durch die Steuereinheit 52 gesteuert, so dass diese beispielsweise dunkelgeschaltet werden kann ("blanking").

Die Detektionseinheit 80 umfasst einen Kamerasensor 82, einen Bandpass-Filter 84 und einen Multiphotonen-Block 86. Der Kamerasensor 82 ist derart ausgebildet, das von der Probe 100 ausgehende Detektionslicht zu detektieren. Vorzugsweise wird die Kamerabelichtungszeit und -auslöserate des Kamerasensors 82 durch die Steuereinheit 52 eingestellt. Der Bandpass-Filter 84 filtert alle Wellenlängen bis auf einen voreingestellten Wellenlängenbereich aus dem von der Probe 100 ausgehenden Detektionslicht heraus. Bei dem voreingestellten Wellenlängenbereich kann es sich beispielsweise um den Wellenlängenbereich des Fluoreszenzlichtes eines bestimmten Farbstoffes handeln. Hierdurch können mithilfe des Kamerasensors 82 nur Bereiche der Probe 100 abgebildet werden, in denen der bestimmte Farbstoff vorhanden ist. Der Multiphotonen-Block 86 ist vorzugsweise durch einen Kurzpass-Filter gebildet. Der Multiphotonen-Block 86 verhindert, dass Anregungslicht auf den Kamerasensor 82 gelangt.

Im Folgenden soll kurz der Strahlengang des Mikroskops 50 nach Figur 13 skizziert werden: Das durch die Beleuchtungseinheit 70 erzeugte Punktmuster 10 wird durch die Ablenkelemente 64 der Abrastervorrichtung 60 entlang einer ersten Richtung und entlang einer zweiten Richtung bewegt. Die Bewegung des Punktmusters 10 ist in Figur 13 durch einen Doppelpfeil P angedeutet. Hierdurch werden nach Durchtritt des Punktmusters 10 durch den dichroitischen Spiegel 54 und die Objektivoptik 90 unterschiedliche Punkte, die im Wesentlichen innerhalb des vorgegebenen Bereichs 40 der Probe 100 liegen, beleuchtet. Von der Probe 100 ausgehendes Detektionslicht fällt nach Durchtritt durch die Objektivoptik 90 und den dichroitischen Spiegel 54 in die Detektionseinheit 80.

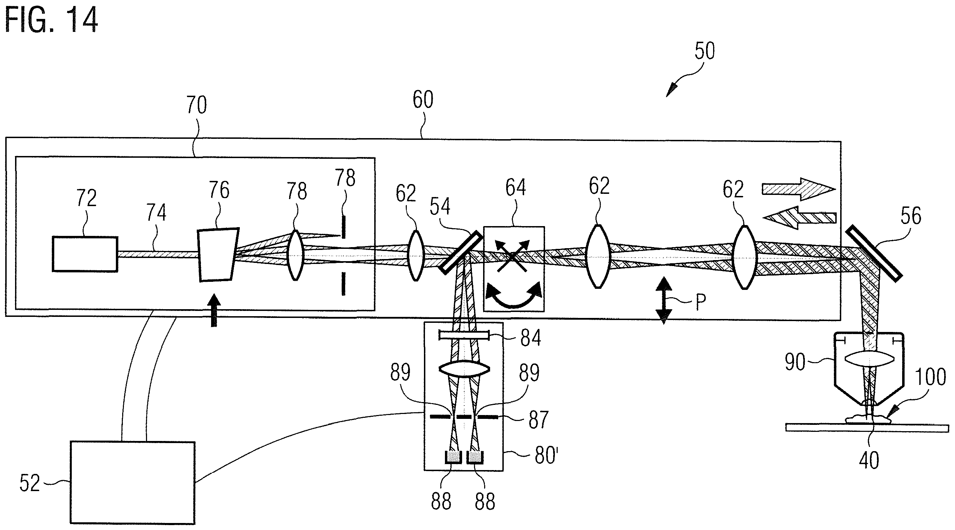

Figur 14 zeigt ein weiteres Ausführungsbeispiel des Mikroskops 50. Das in Figur 14 gezeigte Mikroskop 50 unterscheidet sich im Wesentlichen von dem in Figur 13 gezeigten Mikroskop 50 durch eine Lochblenden-Detektionseinheit 80', welche die Detektionseinheit 80 mit dem Kamerasensor 82 ersetzt. Ferner umfasst das Mikroskop 50 nach Figur 14 einen Umlenkspiegel 56, der zwischen der Abrastervorrichtung 60 und der Objektivoptik 90 angeordnet ist.

Die Lochblenden-Detektionseinheit 80' umfasst einen Bandpass-Filter 84, Punktdetektoren 88 und ein Array 87 von Lochblenden 89. Das Array 87 von Lochblenden 89 ist derart ausgebildet, dass die Lochblenden 89 durch Steuereinheit 52 gesteuert geöffnet oder geschlossen werden können. Die Steuereinheit 52 steuert das Array 87 insbesondere in Abhängigkeit des jeweils eingestellten Punktmusters 10. Vorzugsweise ist dabei jeder geöffneten Lochblende 89 ein Beleuchtungspunkt 12 des Punktmusters 10 zugeordnet. Anstelle eines Arrays 87 von Lochblenden 89 kann das Mikroskop 50 auch einen Mikrospiegelaktor mit einem Mikrospiegelarray umfassen, der dieselbe Funktion erfüllt.

Im Folgenden soll kurz der Strahlengang des Mikroskops 50 nach Figur 14 skizziert werden: Das durch die Beleuchtungseinheit 70 erzeugte Punktmuster 10 fällt nach Durchtritt durch den dichroitischen Spiegel 54 und die weiteren optischen Elemente 62 der Abrastervorrichtung 60 auf den Umlenkspiegel 56. Der Umlenkspiegel 56 lenkt das Punktmuster 10 auf die Objektivoptik 90. Durch die Objektivoptik 90 werden mithilfe des Punktmusters 10 unterschiedliche Punkte beleuchtet, die im Wesentlichen innerhalb des vorgegebenen Bereichs 40 der Probe 100 liegen. Von der Probe 100 ausgehendes Detektionslicht fällt nach Durchtritt durch die Objektivoptik 90 auf den Umlenkspiegel 56. Der Umlenkspiegel 56 lenkt das Detektionslicht durch die weiteren optischen Elemente 62 der Abrastervorrichtung 60 auf den dichroitischen Spiegel 54. Durch den dichroitischen Spiegel 54 wird das von der Probe 100 ausgehende Detektionslicht in die Lochblenden-Detektionseinheit 80' gelenkt.

Das Detektionslicht durchläuft die Ablenkelemente 64 und die weiteren optischen Elemente 62 der Abrastervorrichtung 60 in entgegengesetzter Richtung wie das Punktmuster 10. Zwischen der Probe 100 und den Ablenkelementen 64 vollführt das Detektionslicht eine Bewegung entlang der ersten Richtung und der zweiten Richtung, die der Bewegung des Punktmusters 10 folgt. Die Bewegung des Punktmusters 10 ist in Figur 14 durch einen Doppelpfeil P angedeutet. Beim Durchtritt durch die Ablenkelemente 64 der Abrastervorrichtung 60 wird das Detektionslicht "descanned" (auch: "entscannt"). Insbesondere wird der zwischen den Ablenkelementen 64 und den Punktdetektoren 88 verlaufende Detektionsstrahl als "descanned" bezeichnet, da die Abraster- bzw. Scanbewegung beim Zurücklaufen des Detektionslichts wieder aufgehoben wird. Somit ist sichergestellt, dass das einem der Beleuchtungspunkte 12 zugeordnete Detektionslicht immer durch die dem vorgenannten Beleuchtungspunkt 12 zugeordnete Lochblende 89 auf einen der Punktdetektoren 88 fällt.

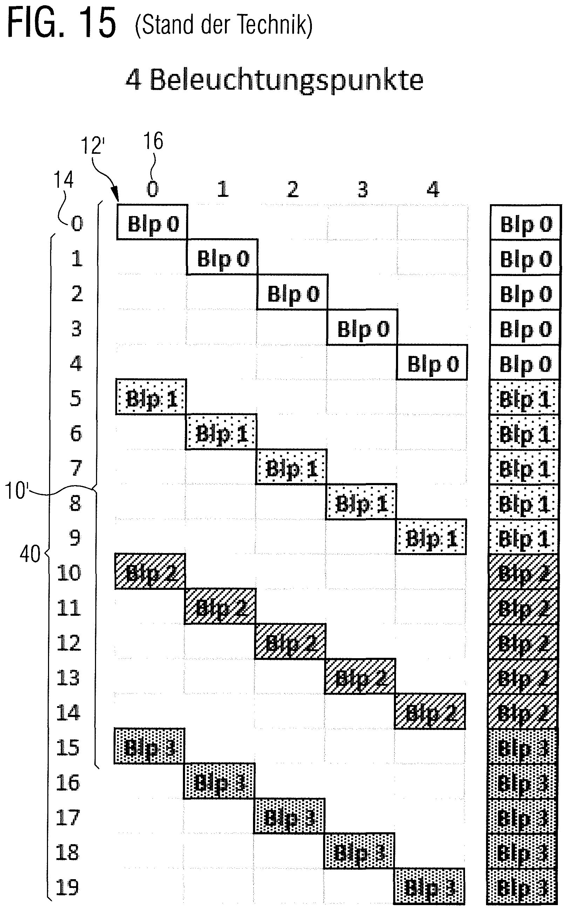

Figur 15 zeigt ein Verfahren zum Abrastern der Probe 100 nach dem Stand der Technik. Das Punktmuster 10' wird durch vier Beleuchtungspunkte 12' gebildet und erstreckt sich entlang der zweiten Richtung über einen Großteil des vorgegebenen Bereichs 40 der Probe 100. Die Beleuchtungspunkte 12' sind äquidistant angeordnet. In mehreren Rasterschritten 16 werden in Richtung der zweiten Richtung aufeinanderfolgende Rasterzeilen 14 abgerastert, bis der vorgegebene Bereich 40 vollständig abgerastert ist.

Figur 16 zeigt ein weiteres Verfahren zum Abrastern der Probe 100 nach dem Stand der Technik. Das Punktmuster 10' ist durch drei Beleuchtungspunkte 12' gebildet, die mit einem Abstand von einer Rasterzeile 14 aufeinanderfolgend angeordnet sind. Dadurch wird effektiv ein Beleuchtungsfleck erzeugt, der breiter ist, als die einzelnen Beleuchtungspunkte 12'. Mithilfe des Punktmusters 10' wird der vorgegebene Bereich 40 in mehreren Rasterschritten 16 vollständig abgerastert, wobei die Schrittweite drei Rasterzeilen 14 beträgt. Dieses Verfahren wird in Figur 12 als Modus A bezeichnet.

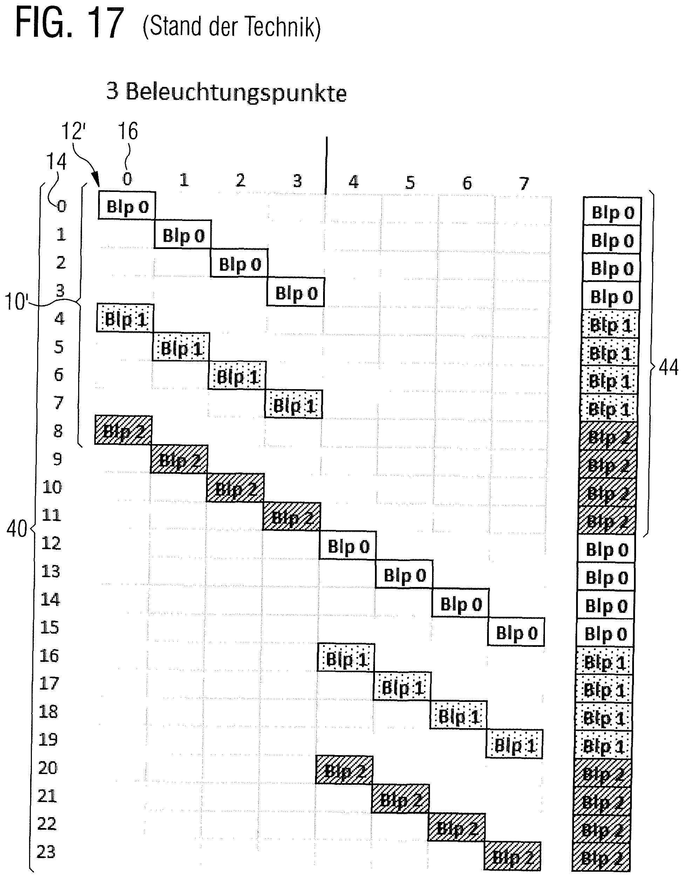

Figur 17 zeigt ein weiteres Verfahren zum Abrastern der Probe 100 nach dem Stand der Technik. Das Punktmuster 10' ist durch drei Beleuchtungspunkte 12' gebildet, die äquidistant entlang einer Richtung angeordnet sind. In mehreren Rasterschritten 16 werden entlang einer Richtung aufeinanderfolgende Rasterzeilen 14 eines Abschnitts 44 des vorgegebenen Bereichs 40 abgerastert. Dies wird für weitere, entlang der vorgenannten Richtung angeordnete Abschnitte 44 des vorgegebenen Bereichs 40 wiederholt, so dass aus den vorbestimmten Abschnitten 44 der vorgegebene Bereich 40 zusammengesetzt werden kann.

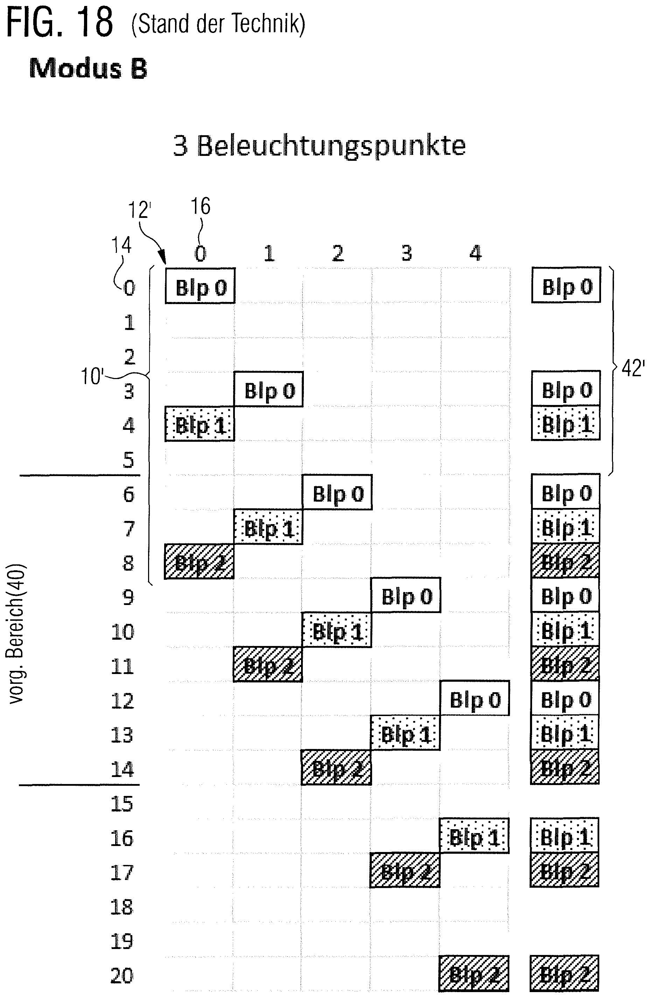

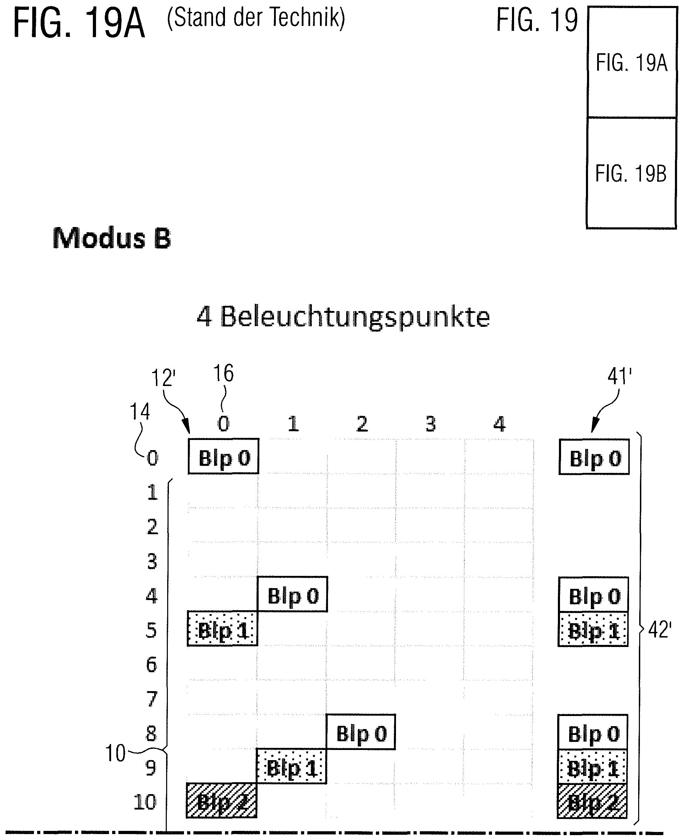

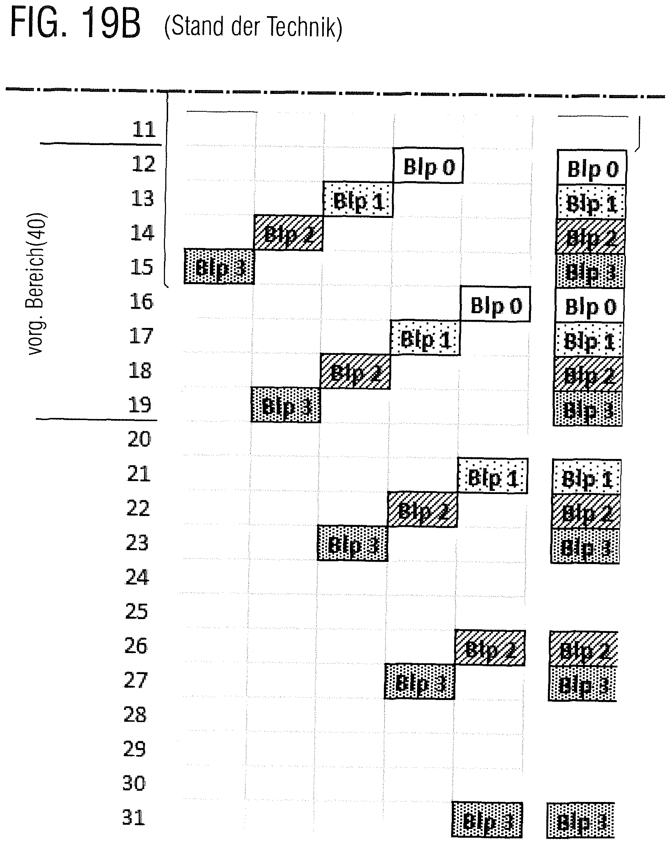

Figuren 18 und 19 zeigen ein weiteres Verfahren zum Abrastern der Probe 100 nach dem Stand der Technik, bei dem der Abstand in Rasterzeilen 14 zwischen zwei benachbarten Beleuchtungspunkten 12' des Punktmusters 10' gleich der Summe aus der Anzahl von Beleuchtungspunkten 12' des Punktmusters 10' und Eins ist. In mehreren Rasterschritten 16 werden aufeinanderfolgende Rasterzeilen 14 abgerastert. In jedem Rasterschritt 16 wird eine Anzahl Rasterzeilen 14 übersprungen, die gleich der Anzahl der Beleuchtungspunkte 12' des Punktmusters 10' ist. Am Rand 42' des insgesamt abgerasterten Bereichs 41' verbleiben Lücken. Dieses Verfahren wird in Figur 12 als Modus B bezeichnet. In dem in Figur 18 gezeigten Ausführungsbeispiel ist das Punktmuster 10' durch drei Beleuchtungspunkte 12' gebildet. In dem in Figur 19 gezeigten Ausführungsbeispiel ist das Punktmuster 10' durch vier Beleuchtungspunkte 12' gebildet.

Bei dem anhand von Figur 18 bzw. Figur 19 beschriebenen Verfahren ist es nachteilhaft, dass der Abstand zweier benachbarter Beleuchtungspunkte des Punktmusters mit der Anzahl an Beleuchtungspunkten verknüpft ist. Die Größe des Punktmusters wächst quadratisch mit der Anzahl an Beleuchtungspunkten, was schnell zu nachteilhaft großen Punktmustern führen kann. Bei einer kleinen Anzahl an Beleuchtungspunkten ist der Abstand zweier benachbarter Beleuchtungspunkte mitunter nachteilhaft klein.

Ausführungsbeispiele der Erfindung sind gegenüber den anhand der Figuren 15 bis 19 gezeigten Verfahren nach dem Stand der Technik dahingehend vorteilhaft, dass sie eine flexible Erzeugung eines optimalen Punktmusters für das Abrastern der Probe ermöglichen.

### Bezugszeichenliste

- 10, 10': Punktmuster
- 12, 12': Beleuchtungspunkt
- 14: Rasterzeile
- 16: Rasterschritt
- 18: Rasterdurchlauf
- 20: Gruppe von Beleuchtungspunkten
- 40: vorgegebener Bereich
- 41, 41': abgerasterter Bereich
- 42, 42': Rand des abgerasterten Bereichs
- 44: Teil des abgerasterten Bereichs
- 50: Mikroskop
- 52: Steuereinheit
- 54: dichroitischer Spiegel
- 56: Umlenkspiegel
- 60: Abrastervorrichtung
- 62, 78: optisches Bauelement
- 64: Ablenkelemente
- 70: Beleuchtungseinheit
- 72: Lichtquelle
- 74: Beleuchtungslichtbündel
- 76: Vorrichtung zum Teilen des Beleuchtungslichtbündels
- 80: Detektionseinheit
- 80': Lochblenden-Detektionseinheit
- 82: Kamerasensor
- 84: Bandpass-Filter
- 86: Multiphotonen-Block
- 87: Array von Lochblenden
- 88: Punktdetektor
- 89: Lochblende
- 90: Objektivoptik
- 100: Probe
- P: Doppelfpeil

## Patentansprüche

1. Verfahren zum Abrastern einer Probe (100),
bei dem mindestens zwei Beleuchtungspunkte (12) zur Bildung eines Punktmusters (10) erzeugt werden, wobei das Punktmuster (10) eine einstellbare Anzahl von Beleuchtungspunkten (12) hat,
wobei ein in Rasterzeilen (14) definierter Abstand zwischen den Beleuchtungspunkten (12) des Punktmusters (10) und/oder eine Anzahl von Gruppen (20) von Beleuchtungspunkten (12) des Punktmusters (10) als mindestens ein frei wählbarer Parameter zur Definition des Punktmusters (10) voreingestellt ist oder eingestellt wird,
wobei das durch den frei wählbaren Parameter definierte Punktmuster (10) zum Abrastern zumindest eines vorgegebenen Bereichs (40) der Probe (100) entlang einer ersten Richtung zur Erzeugung von den Beleuchtungspunkten (12) des Punktmusters (10) zugeordneten Rasterzeilen (14) und entlang einer zweiten Richtung zur Erzeugung von den Rasterzeilen (14) jeweils nachfolgend erzeugten Rasterzeilen (14) bewegt wird,
wobei ein in Rasterzeilen (14) definierter Abstand zwischen den Beleuchtungspunkten (12) des Punktmusters (10) mindestens zwei Rasterzeilen beträgt, und
wobei die Beleuchtungspunkte (12) des Punktmusters (10) auf einer Linie entlang der zweiten Richtung angeordnet sind,
**dadurch gekennzeichnet, dass**
die Bewegung des Punktmusters (10) in Richtung der zweiten Richtung während eines Rasterdurchlaufs in gleich großen Rasterschritten (16) oder mit einer konstanten Geschwindigkeit erfolgt, und
dass eine Länge des vorgegebenen Bereichs (40) längs der zweiten Richtung um mindestens einen Faktor 2 größer ist als eine Länge des Punktmusters (10) längs der zweiten Richtung.

2. Verfahren nach Anspruch 1, **dadurch gekennzeichnet, dass** beim Bewegen des Punktmusters (10) entlang der ersten Richtung der vorgegebene Bereich (40) kontinuierlich oder schrittweise abgerastert wird.

3. Verfahren nach Anspruch 1 oder 2, **dadurch gekennzeichnet, dass** beim Bewegen des Punktmusters (10) entlang der zweiten Richtung der vorgegebene Bereich (40) schrittweise oder kontinuierlich abgerastert wird, und dass bei diesem schrittweisen oder kontinuierlichen Abrastern das Punktmuster (10) in einem Rasterschritt (16) um mindestens eine Rasterzeile (14) entlang der zweiten Richtung bewegt wird.

4. Verfahren nach einem der Ansprüche 1 bis 3, **dadurch gekennzeichnet, dass** die Beleuchtungspunkte (12) des Punktmusters (10) äquidistant angeordnet sind oder mindestens zwei Gruppen (20) von Beleuchtungspunkten (12) bilden, wobei die Beleuchtungspunkte (12) jeder der Gruppen (20) äquidistant angeordnet sind.

5. Verfahren nach einem der Ansprüche 1 bis 4, **dadurch gekennzeichnet, dass** als der mindestens eine frei wählbare Parameter der in Rasterzeilen (14) definierter Abstand zwischen den Beleuchtungspunkten (12) des Punktmusters (10) eingestellt wird, und dass das Punktmuster (10) zum Abrastern des vorgegebenen Bereichs (40) in mindestens zwei Rasterdurchläufen (18) entlang der ersten und zweiten Richtung bewegt wird.

6. Verfahren nach Anspruch 5, **dadurch gekennzeichnet, dass** in jedem der Rasterdurchläufe (18) ein Teil des vorgegebenen Bereichs (40) abgerastert wird, und dass die in aufeinanderfolgenden Rasterdurchläufen (18) abgerasterten Teile des vorgegebenen Bereichs (40) jeweils um mindestens eine Rasterzeile (14) entlang der zweiten Richtung gegeneinander versetzt sind.

7. Verfahren nach Anspruch 5 oder 6, **dadurch gekennzeichnet, dass** in jedem der Rasterdurchläufe (18) ein schrittweises Abrastern des vorgegebenen Bereichs (40) entlang der zweiten Richtung erfolgt, indem das Punktmuster (10) in einem Rasterschritt (16) um eine Anzahl von Rasterzeilen (14) entlang der zweiten Richtung bewegt wird, die gleich dem Produkt der Anzahl von Beleuchtungspunkten (12) des Punktmusters (10) und dem in Rasterzeilen (14) definierten Abstand zwischen den Beleuchtungspunkten (12) des Punktmusters (10) ist.

8. Verfahren nach einem der Ansprüche 1 bis 7, **dadurch gekennzeichnet, dass** als der mindestens eine frei wählbare Parameter eine Anzahl von Gruppen (20) von Beleuchtungspunkten (12) des Punktmusters (10) eingestellt wird, und dass die eingestellte Anzahl von Gruppen (20) von Beleuchtungspunkten (12) des Punktmusters (10) ein Teiler der Anzahl von Beleuchtungspunkten (12) des Punktmusters (10) ist, wobei die Beleuchtungspunkte (12) jeder der Gruppen (20) eine gleiche Anzahl haben.

9. Verfahren nach Anspruch 8, **dadurch gekennzeichnet, dass** der in Rasterzeilen (14) definierter Abstand zwischen den Beleuchtungspunkten (12) des Punktmusters (10), die einer einzigen der Gruppen (20) von Beleuchtungspunkten (12) des Punktmusters (10) zugeordnet sind, gleich der eingestellten Anzahl von Gruppen (20) von Beleuchtungspunkten (12) des Punktmusters (10) ist.

10. Verfahren nach Anspruch 8 oder 9, **dadurch gekennzeichnet, dass** der in Rasterzeilen (14) definierter Abstand zwischen den Beleuchtungspunkten (12) des Punktmusters (10), die aufeinanderfolgenden Gruppen (20) von Beleuchtungspunkten (12) des Punktmusters (10) zugeordnet sind, gleich der Summe der eingestellten Anzahl von Gruppen (20) von Beleuchtungspunkten (12) des Punktmusters (10) und Eins ist.

11. Verfahren nach einem der Ansprüche 8 bis 10, **dadurch gekennzeichnet, dass** in einem einzigen Rasterdurchlauf ein schrittweises Abrastern des vorgegebenen Bereichs (40) entlang der zweiten Richtung erfolgt, indem das Punktmuster (10) in einem Rasterschritt (16) um eine Anzahl von Rasterzeilen (14) entlang der zweiten Richtung bewegt wird, die gleich der Anzahl von Beleuchtungspunkten (12) des Punktmusters (10) ist.

12. Verfahren nach einem der Ansprüche 1 bis 11, **dadurch gekennzeichnet, dass** die Beleuchtungspunkte (12) des Punktmusters (10) mithilfe eines akustooptischen Deflektors (AOD) oder mithilfe eines Strahlteilers aus einem Beleuchtungslichtbündel (74) erzeugt werden.

13. Verfahren nach einem der Ansprüche 1 bis 12, **dadurch gekennzeichnet, dass** beim Bewegen des Punktmusters (10) entlang der zweiten Richtung der vorgegebene Bereich (40) schrittweise abgerastert wird, und dass bei nachfolgenden Rasterschritten (16) das Punktmuster (10) in die zweite Richtung und entgegengesetzt zur zweiten Richtung bewegt wird.

14. Vorrichtung (60) zum Abrastern einer Probe (100),
mit einer Beleuchtungseinheit (70), die mindestens zwei Beleuchtungspunkte (12) zur Bildung eines Punktmusters (10) erzeugt, wobei das Punktmuster (10) eine einstellbare Anzahl von Beleuchtungspunkten (12) hat,
wobei die Vorrichtung (60) eine Steuereinheit (52) zum Steuern der Beleuchtungseinheit (70) umfasst, wobei die Steuereinheit (52) die Beleuchtungseinheit (70) derart steuert, dass mindestens ein frei wählbarer Parameter zur Definition des Punktmusters (10) voreingestellt ist oder eingestellt wird,
wobei als der mindestens eine frei wählbare Parameter ein in Rasterzeilen (14) definierter Abstand zwischen den Beleuchtungspunkten (12) des Punktmusters (10) und/oder eine Anzahl von Gruppen (20) von Beleuchtungspunkten (12) des Punktmusters eingestellt werden,
wobei die Beleuchtungseinheit (70) das durch den frei wählbaren Parameter definierte Punktmuster (10) zum Abrastern zumindest eines vorgegebenen Bereichs (40) der Probe (100) entlang einer ersten Richtung zur Erzeugung von den Beleuchtungspunkten (12) des Punktmusters (10) zugeordneten Rasterzeilen (14) und entlang einer zweiten Richtung zur Erzeugung von den Rasterzeilen (14) jeweils nachfolgend erzeugten Rasterzeilen (14) bewegt,
wobei ein in Rasterzeilen (14) definierter Abstand zwischen den Beleuchtungspunkten (12) des Punktmusters (10) mindestens zwei Rasterzeilen beträgt, und
wobei die Beleuchtungspunkte (12) des Punktmusters (10) auf einer Linie entlang der zweiten Richtung angeordnet sind,
**dadurch gekennzeichnet, dass**
die Bewegung des Punktmusters (10) in Richtung der zweiten Richtung während eines Rasterdurchlaufs in gleich großen Rasterschritten (16) oder mit einer konstanten Geschwindigkeit erfolgt, und
dass eine Länge des vorgegebenen Bereichs (40) längs der zweiten Richtung um mindestens einen Faktor 2 größer ist als eine Länge des Punktmusters (10) längs der zweiten Richtung.

15. Vorrichtung (60) nach Anspruch 14, **dadurch gekennzeichnet, dass** die Beleuchtungseinheit (70) wenigstens einen akustooptischen Deflektor (AOD) oder wenigstens einen Strahlteiler umfasst.

16. Mikroskop (50) mit einer Vorrichtung (60) nach Anspruch 14 oder 15.

## Claims

1. A method for scanning a sample (100),
in which at least two illumination points (12) are generated to form a point pattern (10), wherein the point pattern (10) has an adjustable number of illumination points (12),
wherein a distance, defined in scan lines (14), between the illumination points (12) of the point pattern (10) and/or a number of groups (20) of illumination points (12) of the point pattern (10) is preset or set as at least one freely selectable parameter for defining the point pattern (10),
wherein the point pattern (10), defined by the freely selectable parameter, for scanning at least one predetermined area (40) of the sample (100) is moved along a first direction to generate scan lines (14), associated with the illumination points (12) of the point pattern (10), and along a second direction to generate scan lines (14), respectively subsequently generated scan lines (14),
wherein a distance, defined in scan lines (14), between the illumination points (12) of the point pattern (10) is at least two scan lines, and
wherein the illumination points (12) of the point pattern (10) are arranged on a line along the second direction,
**characterized in that**
the movement of the point pattern (10) in the direction of the second direction during a scan pass takes place in equally sized scan steps (16) or at a constant speed, and
a length of the predetermined area (40) along the second direction is at least a factor of 2 greater than a length of the point pattern (10) along the second direction.

2. The method according to claim 1, **characterized in that**, during the movement of the point pattern (10) along the first direction, the predetermined area (40) is scanned continuously or step-by-step.

3. The method according to claim 1 or 2, **characterized in that**, during the movement of the point pattern (10) along the second direction, the predetermined area (40) is scanned step-by-step or continuously, and that during this step-by-step or continuous scanning, the point pattern (10) is moved in a scanning step (16) by at least one scanning line (14) along the second direction.

4. The method according to any one of claims 1 to 3, **characterized in that** the illumination points (12) of the point pattern (10) are arranged equidistantly or form at least two groups (20) of illumination points (12), wherein the illumination points (12) of each of the groups (20) are arranged equidistantly.

5. The method according to any one of claims 1 to 4 , **characterized in that** the distance between the illumination points (12) of the point pattern (10), defined in scan lines (14), is set as the at least one freely selectable parameter, and that the point pattern (10) is moved along the first and second directions in at least two scan passes (18) to scan the predetermined area (40).

6. The method according to claim 5, **characterized in that**, in each of the scan passes (18), a part of the predetermined area (40) is scanned, and that the parts of the predetermined area (40), scanned in successive scan passes (18), are each offset from one another by at least one scan line (14) along the second direction.

7. The method according to claim 5 or 6, **characterized in that**, in each of the scan passes (18), a step-by-step scanning of the predetermined area (40) takes place along the second direction,
by moving the point pattern (10) in a scan step (16) by a number of scan lines (14) along the second direction which is equal to the product of the number of illumination points (12) of the point pattern (10) and the distance between the illumination points (12) of the point pattern (10), defined in scan lines (14).

8. The method according to any one of claims 1 to 7, **characterized in that** a number of groups (20) of illumination points (12) of the point pattern (10) is set as the at least one freely selectable parameter, and that the set number of groups (20) of illumination points (12) of the point pattern (10) is a divisor of the number of illumination points (12) of the point pattern (10), wherein the illumination points (12) of each of the groups (20) have an equal number.

9. The method according to claim 8, **characterized in that** the distance, defined in scan lines (14), between the illumination points (12) of the point pattern (10) which are assigned to a single one of the groups (20) of illumination points (12) of the point pattern (10), is equal to the set number of groups (20) of illumination points (12) of the point pattern (10).

10. The method according to claim 8 or 9, **characterized in that** the distance, defined in scan lines (14), between the illumination points (12) of the point pattern (10) assigned to successive groups (20) of illumination points (12) of the point pattern (10) is equal to the sum of the set number of groups (20) of illumination points (12) of the point pattern (10) plus one.

11. The method according to any one of claims 8 to 10, **characterized in that**, in a single scan pass, a step-by-step scanning of the predetermined area (40) along the second direction is carried out by moving the point pattern (10) in a scan step (16) by a number of scan lines (14) along the second direction, which is equal to the number of illumination points (12) of the point pattern (10).

12. The method according to any one of claims 1 to 11, **characterized in that** the illumination points (12) of the point pattern (10) are generated from an illumination light beam (74) by means of an acousto-optical deflector (AOD) or by means of a beam splitter.

13. The method according to any one of claims 1 to 12, **characterized in that**, when moving the point pattern (10) along the second direction, the predetermined area (40) is scanned step-by-step, and that in subsequent scanning steps (16) the point pattern (10) is moved in the second direction and opposite to the second direction.

14. A device (60) for scanning a sample (100),
having an illumination unit (70) which generates at least two illumination points (12) to form a point pattern (10), wherein the point pattern (10) has an adjustable number of illumination points (12),
wherein the device (60) comprises a control unit (52) for controlling the illumination unit (70), wherein the control unit (52) controls the illumination unit (70) such that at least one freely selectable parameter for defining the point pattern (10) is preset or is set,
wherein, as the at least one freely selectable parameter, a distance, defined in scan lines (14), between the illumination points (12) of the point pattern (10) and/or a number of groups (20) of illumination points (12) of the point pattern is set,
wherein the illumination unit (70) moves the point pattern (10), defined by the freely selectable parameter, for scanning at least one predetermined area (40) of the sample (100) along a first direction to generate scan lines (14), associated with the illumination points (12) of the point pattern (10), and along a second direction to generate scan lines (14), respectively subsequently generated scan lines (14),
wherein a distance, defined in scan lines (14), between the illumination points (12) of the point pattern (10) is at least two scan lines, and wherein the illumination points (12) of the point pattern (10) are arranged on a line along the second direction,
**characterized in that**
the movement of the point pattern (10) in the direction of the second direction during a scan pass takes place in equally sized scan steps (16) or at a constant speed, and
a length of the predetermined area (40) along the second direction is at least a factor of 2 greater than a length of the point pattern (10) along the second direction.

15. The device (60) according to claim 14, **characterized in that** the illumination unit (70) comprises at least one acousto-optical deflector (AOD) or at least one beam splitter.

16. A microscope (50) having a device (60) according to claim 14 or 15.

## Revendications

1. Procédé de balayage d'un échantillon (100),
dans lequel au moins deux points d'éclairage (12) sont générés pour former un motif de points (10), le motif de points (10) présentant un nombre réglable de points d'éclairage (12),
dans lequel une distance définie en trames (14) entre les points d'éclairage (12) du motif de points (10) et/ou un nombre de groupes (20) de points d'éclairage (12) du motif de points (10) sont préréglés ou sont réglés en tant qu'au moins un paramètre apte à être choisi librement pour définir le motif de points (10),
dans lequel le motif de points (10) défini par le paramètre apte à être choisi librement est déplacé de façon à balayer au moins une zone (40) spécifiée de l'échantillon (100) le long d'une première direction afin de générer des trames (14) associées aux points d'éclairage (12) du motif de points (10) et le long d'une deuxième direction afin de générer des trames (14) générées respectivement de manière à suivre les trames (14),
une distance définie en trames (14) entre les points d'éclairage (12) du motif de points (10) étant d'au moins deux trames, et
les points d'éclairage (12) du motif de points (10) étant disposés sur une ligne le long de la deuxième direction,
**caractérisé en ce que**
le déplacement du motif de points (10) en direction de la deuxième direction a lieu pendant un passage de balayage lors d'étapes de balayage équivalentes (16) ou à une vitesse constante, et
**en ce qu'**une longueur de la zone (40) spécifiée le long de la deuxième direction est supérieure d'au moins un facteur de 2 à une longueur du motif de points (10) le long de la deuxième direction.

2. Procédé selon la revendication 1, **caractérisé en ce que** lors du déplacement du motif de points (10) le long de la première direction, la zone (40) spécifiée est balayée en continu ou progressivement.

3. Procédé selon la revendication 1 ou la revendication 2, **caractérisé en ce que** lors du déplacement du motif de points (10) le long de la deuxième direction, la zone (40) spécifiée est balayée progressivement ou en continu, et que lors dudit balayage progressif ou continu, le motif de points (10) est déplacé lors d'une étape de balayage (16) d'au moins une trame (14) le long de la deuxième direction.

4. Procédé selon l'une quelconque des revendications 1 à 3, **caractérisé en ce que** les points d'éclairage (12) du motif de points (10) sont disposés de manière équidistante ou forment au moins deux groupes (20) de points d'éclairage (12), dans lequel les points d'éclairage (12) de chacun des groupes (20) sont disposés de manière équidistante.

5. Procédé selon l'une quelconque des revendications 1 à 4, **caractérisé en ce que** la distance définie en trames (14) entre les points d'éclairage (12) du motif de points (10) est réglée en tant que l'au moins un paramètre apte à être choisi librement, et que le motif de points (10) est déplacé en au moins deux passages de balayage (18) le long de la première et de la deuxième direction pour balayer la zone (40) spécifiée.

6. Procédé selon la revendication 5, **caractérisé en ce qu'**une partie de la zone (40) spécifiée est balayée dans chacun des passages de balayage (18), et que les parties, balayées lors de passages de balayage (18) consécutifs, de la zone (40) spécifiée sont décalées les unes à l'encontre des autres respectivement d'au moins une trame (14) le long de la deuxième direction.

7. Procédé selon la revendication 5 ou la revendication 6, **caractérisé en ce qu'**un balayage progressif de la zone (40) spécifiée le long de la deuxième direction a lieu lors de chacun des passages de balayage (18), **en ce que** le motif de points (10) est déplacé, lors d'une étape de balayage (16), d'un nombre de trames (14) le long de la deuxième direction, qui est égal au produit du nombre de points d'éclairage (12) du motif de points (10) et à la distance, définie en trames (14), entre les points d'éclairage (12) du motif de points (10).

8. Procédé selon l'une quelconque des revendications 1 à 7, **caractérisé en ce que** un nombre de groupes (20) de points d'éclairage (12) du motif de points (10) est réglé en tant que l'au moins un paramètre apte à être choisi librement, et que le nombre réglé de groupes (20) de points d'éclairage (12) du motif de points (10) est une partie du nombre de points d'éclairage (12) du motif de points (10), dans lequel les points d'éclairage (12) de chacun des groupes (20) présentent un nombre identique.

9. Procédé selon la revendication 8, **caractérisé en ce que** la distance définie en trames (14) entre les points d'éclairage (12) du motif de points (10), qui sont associés à un seul des groupes (20) de points d'éclairage (12) du motif de points (10), est égale au nombre réglé de groupes (20) de points d'éclairage (12) du motif de points (10).

10. Procédé selon la revendication 8 ou la revendication 9, **caractérisé en ce que** la distance définie en trames (14) entre les points d'éclairage (12) du motif de points (10), qui sont associés à des groupes (20) se suivant de points d'éclairage (12) du motif de points (10), est égale à la somme du nombre réglé de groupes (20) de points d'éclairage (12) du motif de points (10) et est de 1.

11. Procédé selon l'une quelconque des revendications 8 à 10, **caractérisé en ce qu'**un balayage progressif de la zone (40) spécifiée le long de la deuxième direction a lieu lors d'un unique passage de balayage **en ce que** le motif de points (10) est déplacé lors d'une étape de balayage (16) d'un nombre de trames (14) le long de la deuxième direction, qui est égal au nombre de points d'éclairage (12) du motif de points (10).

12. Procédé selon l'une quelconque des revendications 1 à 11, **caractérisé en ce que** les points d'éclairage (12) du motif de points (10) sont générés à l'aide d'un déflecteur acousto-optique (AOD) ou à l'aide d'un séparateur de faisceau d'un faisceau lumineux d'éclairage (74).

13. Procédé selon l'une quelconque des revendications 1 à 12, **caractérisé en ce que** lors du déplacement du motif de points (10) le long de la deuxième direction, la zone (40) spécifiée est balayée progressivement, et que lors d'étapes de balayage (16) qui suivent, le motif de points (10) est déplacé dans la deuxième direction et à l'opposé de la deuxième direction.

14. Dispositif (60) de balayage d'un échantillon (100),
avec une unité d'éclairage (70) qui génère au moins deux points d'éclairage (12) pour former un motif de points (10), le motif de points (10) présentant un nombre réglable de points d'éclairage (12),
le dispositif (60) comprenant une unité de commande (52) destinée à commander l'unité d'éclairage (70), l'unité de commande (52) commandant l'unité d'éclairage (70) de telle manière qu'au moins un paramètre apte à être choisi librement est préréglé ou est réglé dde façon à définir le motif de points (10),
une distance définie en trames (14) entre les points d'éclairage (12) du motif de points (10) et/ou un nombre de groupes (20) de points d'éclairage (12) du motif de points étant réglés en tant que ledit au moins un paramètre apte à être choisi librement,
l'unité d'éclairage (70) déplaçant le motif de points (10) défini par le paramètre apte à être choisi librement de façon à balayer au moins une zone (40) spécifiée de l'échantillon (100) le long d'une première direction afin de générer des trames (14) associées aux points d'éclairage (12) du motif de points (10) et le long d'une deuxième direction afin de générer des trames (14) générées respectivement de manière à suivre les trames (14),
une distance définie en trames (14) entre les points d'éclairage (12) du motif de points (10) étant d'au moins deux trames, et les points d'éclairage (12) du motif de points (10) étant disposés sur une ligne le long de la deuxième direction,
**caractérisé en ce que**
le déplacement du motif de points (10) en direction de la deuxième direction a lieu pendant un passage de balayage lors d'étapes de balayage équivalentes (16) ou à une vitesse constante, et
**en ce qu'**une longueur de la zone (40) spécifiée le long de la deuxième direction est supérieure d'au moins un facteur de 2 à une longueur du motif de points (10) le long de la deuxième direction.

15. Dispositif (60) selon la revendication 14, **caractérisé en ce que** l'unité d'éclairage (70) comprend au moins un déflecteur acousto-optique (AOD) ou au moins un séparateur de faisceau.

16. Microscope (50) avec un dispositif (60) selon la revendication 14 ou la revendication 15.
